# EUROPÄISCHE PATENTSCHRIFT

(11) **EP 3 213 274 B1**
(45) Veröffentlichungstag und Bekanntmachung des Hinweises auf die Patenterteilung: **07.06.2023**
(21) Anmeldenummer: 15784729.4
(22) Anmeldetag: 26.10.2015
(51) Int. Cl.: G06Q 10/08, G06Q 50/28, G06Q 30/02

(54) **VERFAHREN UND SYSTEM ZUM PROGRESSIVEN KOMMISSIONIEREN**
METHOD AND SYSTEM FOR PROGRESSIVE ORDER PICKING
PROCÉDÉ ET SYSTÈME D'APPROVISIONNEMENT

(30) Priorität: 27.10.2014 DE 102014115579
(43) Veröffentlichungstag der Anmeldung: 06.09.2017
(73) Patentinhaber: SSI Schäfer Automation GmbH, 8051 Graz-Gösting (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2015/074731
(87) Internationale Veröffentlichungsnummer: WO 2016/066578

(56) Entgegenhaltungen:
- DE-A1-102013 101 659
- DE-A1-102013 103 869
- DE-B3-102011 104 511
- US-A1- 2002 169 657
- US-A1- 2008 103 874
- US-A1- 2008 162 270
- US-A1- 2010 138 275

## Beschreibung

Die vorliegende Erfindung betrifft ein Lager- und Kommissioniersystem zum progressiven Kommissionieren von Artikeln gemäß Neuaufträgen, die bestellte Artikel hinsichtlich eines jeweiligen bestellten Artikeltyps einschließlich einer zugehörigen Stückzahl definieren, wobei Daten von Altaufträgen berücksichtigt und ausgewertet werden. Ferner betrifft die Erfindung ein Verfahren zum progressiven Kommissionieren sowie ein Verfahren zum zyklischen Befüllen eines Pufferlagers. Bei der Erfindung geht es insbesondere darum, die Artikel im Lagerbereich vorausschauend (progressiv) anzuordnen, so dass Effizienzsteigerungen möglich sind.

Beim Handel über das Internet (E-Commerce) kommt es zu großen Schwankungen in den Artikelsortimenten (Gesamtheit aller verschiedenen Artikeltypen) der Anbieter innerhalb kurzer Zeitintervalle (Tage, Wochen oder Monate). Auftragsstrukturen (Anzahl der verschiedenen Artikeltypen und zugehörige Stückzahlen/Mengen pro Auftrag) ändern sich kurzfristig, häufig und sind schwer vorhersagbar. Während der Weihnachtszeit wird in Bezug auf die Menge und Bandbreite beispielsweise mehr bestellt als im Sommer während der Ferienzeit. Während sich eine Neuerscheinung eines Bestsellers anfangs gut, das heißt schnell und in großen Stückzahlen, absetzen lässt, verringert sich der Umsatz mit zunehmender Zeit. Nach einer gewissen Zeit ist die Neuerscheinung kein Bestseller mehr. Der Markt ist dann gesättigt. Dafür gibt es aber möglicherweise wiederum einen neuen Bestseller.

Diese Fluktuationen durch eine Reorganisation (Umverteilung) der Artikel innerhalb des Lagers abzubilden, ist nahezu unmöglich. Die E-Commerce-Händler müssen ihre Lager- und Kommissioniersysteme auf die oben beschriebenen Belastungsspitzen (z.B. Weihnachten) auslegen, was in den übrigen Zeiten der Niedrigauslastung zu einem ineffizienten Betrieb des Systems bei hohen Gesamtinvestitionen führt.

Gerade im Bereich des E-Commerce sehen sich die Anbieter mit einer sehr hohen Anzahl unterschiedlicher Artikeltypen bzw. SKUs (Stock Keeping Units) konfrontiert, die über das Jahr hinweg bestellt werden. Es kann vorkommen, dass an einem einzigen Tag 20% des Jahresbedarfs eines spezifischen Artikeltyps und die restlichen 80% partiell verteilt über den Rest des Jahres umgesetzt werden.

Ferner gibt es von Tag zu Tag bei den bestellten Artikeltypen große Fluktuationen. Heute verkauft sich zum Beispiel der Artikel "A" besonders gut und Morgen gar nicht mehr. Dafür sich verkauft am nächsten Tag der Artikel "B" besonders gut. Dies bedeutet, dass gerade im E-Commerce steile ABC-Kurven üblich sind. Die jeweiligen ABC-Tageskurven steigen sehr steil an. Problematisch ist, dass sich die artikeltypspezifischen Zusammensetzungen des 20%-Anteils (A-Artikel) und des 80%-Anteils (B- und C-Artikel) der ABC-Kurve täglich ändern. Diese täglichen Änderungen lassen es nicht zu, die entsprechende ABC-Verteilung auf den Lager- und Kommissionierbereich abzubilden (zum Beispiel kurze Wege für A-Artikel und längere Wege für B- und C-Artikel). Der Reorganisationsaufwand bei einer statischen Artikelbereitsstellung wäre zu groß. Auf diese schwankenden Anforderungen müssen die Anbieter aber flexibel reagieren können.

Ein weiteres Problem stellt die über ein Jahr gesehene schwankende Bestellhäufigkeit für einen jeweiligen Artikeltyp dar. Dies gilt umso mehr, wenn ein spezieller Artikeltyp nur in geringen und unvorhersagbaren Stückzahlen bestellt wird. Es kann zum Beispiel Tage geben, an denen ein bestimmter Artikeltyp bis zu 40 mal bestellt wird, wobei dieser Artikeltyp aber an über 30% der Tage gar nicht bestellt wird. Auch hier ist es nicht möglich, das Artikelsortiment im Lagerbereich entsprechend zu organisieren bzw. zu verteilen.

Noch ein weiteres Problem stellen starke Belastungsänderungen des Systems innerhalb eines Tagesverlaufes dar. So gibt es zum Beispiel zeitliche Bestellungsspitzen in der Abendzeit kurz nach Feierabend, weil viele potentielle Kunden dann die Zeit haben, im Internet zu surfen und Bestellungen zu tätigen, wohingegen während der normalen Arbeitszeit dafür keine Zeit vorhanden ist. Um diesem Problem zu begegnen, müssen die Anbieter ihre Lager- und Kommissioniersysteme wiederum auf die mögliche Maximallast auslegen. Die Systeme müssen also hinsichtlich einer Kommissionierleistung entsprechend groß ausgelegt werden, um diese Maximallasten, die nur von sehr kurzer zeitlicher Dauer sind, ausgleichen zu können. Während der restlichen Zeit wird das System nur teilweise genutzt, so dass der Kosten-Nutzen-Aspekt negativ ist.

Ferner gibt es starke Schwankungen in den bestellten Stückzahlen und in den Auftragsstrukturen innerhalb des Verlaufs eines Monats. Wie bereits oben angedeutet, wird während des Weihnachtsgeschäfts zum Beispiel die dreifache Menge an Artikeln umgesetzt wie zu anderen Zeiten. Während des Weihnachtsgeschäfts ist auch die Wahrscheinlichkeit größer, dass die Kunden mehrere verschiedene Artikel gleichzeitig bestellen, wohingegen in der restlichen Zeit oft nur ein einziger Artikeltyp (Einzeiler/eine Auftragszeile) bestellt wird. Um diese Schwankungen auszugleichen, ist wiederum eine hohe Investition durch eine entsprechende Auslegung des Systems auf die Maximallast und eine Auslegung auf stark schwankende Auftragsstrukturen nötig.

Die DE 10 2013 103869 A1 offenbart ein Lager- und Kommissioniersystem sowie ein Verfahren zum Umorganisieren eines Artikelsortiments. Die DE 10 2013 101 659 A1 offenbart ein Lager- und Kommissioniersystem zum progressiven Kommissionieren von Artikeln gemäß Neuaufträgen, die bestellte Artikel hinsichtlich eines jeweiligen bestellten Artikeltyps einschließlich einer zugehörigen Stückzahl definieren, wobei das System aufweist:
- ein Kommissionierlager, in welchem eine Vielzahl von unterschiedlichen Artikeltypen, die ein Artikelsortiment für die Kommissionierung bilden, gelagert sind,
- eine Kommissionierstation für die Kommissionierung von Artikeln, die im Kommissionierlager gelagert sind;
- ein Pufferlager, in welchem ausgewählte Artikeltypen gelagert sind, wobei das Pufferlager mit ausgewählten Artikeltypen, die aus dem Kommissionierlager stammen;
- mindestens eine Arbeitsstation, wobei die Arbeitsstation materialflusstechnisch mit dem Pufferlager verbunden ist;
- eine Konsolidierungspuffer-Einrichtung zum Abarbeiten von Neuaufträgen.

Es ist daher eine Aufgabe der vorliegenden Erfindung, ein Lager- und Kommissioniersystem sowie ein Verfahren zum progressiven Kommissionieren vorzusehen, welches insbesondere die bei E-Commerce-Händlern auftretenden Probleme aufgrund schwankender Auftragsintensitäten und Auftragsstrukturen löst.

Diese Aufgabe wird gelöst durch ein Lager- und Kommissioniersystem nach Anspruch 1.

Das System der Erfindung zeichnet sich im Wesentlichen durch eine Leistungssteigerung aus. Die Leistungssteigerung wird durch eine Vorkommissionierung erzielt. Ein kleiner Teil des Artikelsortiments, welcher üblicherweise im Langzeitlager bevorratet ist, wird in einen dazu separat angeordneten Pufferbereich transferiert, und zwar vorzugsweise mit einer täglich anderen Zusammensetzung. Die initiale Zusammensetzung der Artikel, die aus dem Langzeitlager in den Kurzzeitpuffer transferiert werden, bestimmt sich grundsätzlich aus einer Analyse von Altaufträgen, die bereits erledigt wurden, ohne dass das System und das Konzept der vorliegenden Erfindung zum Einsatz kamen. Zusätzlich können optional auch Neuaufträge berücksichtigt werden, die bereits eingegangen, aber noch nicht bearbeitet sind.. Durch die Vorkommissionierung verkürzen sich die Wegzeiten im Bereich des herkömmlichen Lagers durch eine Verlagerung in das Pufferlager.

Außerdem können die Anbieter/Systembetreiber flexibler auf sich ständig und schnell ändernde Anforderungen reagieren.

Das Pufferlager wird mit vergleichsweise wenigen Artikeltypen in relativ geringen Stückzahlen bestückt. Die Artikel für das Pufferlager werden so ausgewählt, dass sich das Pufferlager durch den laufenden Verbrauch (Kommissionierung), vorzugsweise innerhalb sehr kurzer Zeit (Kommissionierreichweite), von selbst entleert. Die Kommissionierreichweite des Pufferlagers ist also sehr kurz, wohingegen die Kommissionierreichweite des Kommissionierlagers sehr groß ist. Aus dem Kommissionierlager können Aufträge über relativ lange Zeiträume (Tage, Wochen, Monate) bedient werden, ohne das Kommissionierlager neu zu füllen oder nachzufüllen. Das Pufferlager sollte hingegen möglichst oft und schnell neu befüllt werden. Weil sich das Pufferlager nahezu vollständig von selbst entleert, sind Rücklagerungen in das Kommissionierlager nicht erforderlich. Auch dieser Aspekt trägt zur Leistungssteigerung bei. Es werden wenige Artikel innerhalb des Systems bewegt.

Im Bereich der Arbeitsstation wird vorzugsweise batch-orientiert gearbeitet. Beträgt die herkömmliche Batch-Größe (Zeit, in welcher Aufträge für eine Batch-Bearbeitung gesammelt werden) in einem konventionellen System ein bis zwei Stunden, so wird die Batch-Größe bei der Erfindung wesentlich erhöht.

Vorzugsweise weist der Schritt des Auswählens der Artikeltypen auf: Bestimmen der verschiedenen Artikeltypen, die in den Daten der Altaufträge enthalten sind; für jeden der Artikeltypen, der in den Daten der Altaufträge enthalten ist, Bestimmen einer zeitlichen Bestellhäufigkeit, vorzugsweise durch Quotientenbildung aus einer Anzahl von Bestellzeiteinheiten, während denen der jeweilige Artikeltyp bestellt wurde, und einer Anzahl von Bestellzeiteinheiten, während denen Bestellungen möglich waren; für jeden der Artikeltypen, der in den Daten der Altaufträge enthalten ist, Bestimmen einer mengenmäßigen Bestellhäufigkeit, vorzugsweise der Gesamtstückzahl; Ordnen der verschiedenen Artikeltypen nach zeitlichen und/oder mengenmäßigen Bestellhäufigkeiten, vorzugsweise unter Berücksichtigung von zeitlichen und/oder mengenmäßigen Schwellenwerten; und Auswählen der zeitlich und/oder mengenmäßig am häufigsten auftretenden Artikeltypen.

Es ist davon auszugehen, dass, wenn ein Artikeltyp in der jüngsten Vergangenheit häufig bestellt wurde, der gleiche Artikeltyp in den nächsten Tagen ebenfalls häufig bestellt werden wird. Deshalb bestimmt man die zeitliche und mengenmäßige Bestellhäufigkeit und wählt anschließend die Artikeltypen mit den größten Bestellhäufigkeiten für das Pufferlager aus. Dabei können Schwellenwerte berücksichtigt werden, um punktuelle "Ausreißer" bei der Bewertung auszuschließen.

Vorzugsweise weist der Schritt des zyklischen Erzeugens des Befüllungsauftrags ferner auf: Bestimmen einer Verteilung der artikelspezifischen Pufferstückzahlen auf die Lagereinheiten.

Neben dem Gewicht und dem Volumen der Artikel können ferner die Volumina der Lagereinheiten sowie mögliche (Fach-)Unterteilungen der Lagereinheiten berücksichtigt werden. Optional werden auch Grenzwerte für derartige Parameter, insbesondere beim Aufstocken, berücksichtigt. Auf diese Weise wird verhindert, dass zum Beispiel beim Aufstocken auf ganze Lagereinheiten oder ganze Fächer zu viele Artikel eines bestimmten Artikeltyps in das Pufferlager eingelagert werden. Wenn zu viele Artikel in das Pufferlager eingelagert werden, steigt die Wahrscheinlichkeit, dass sich das Pufferlager nicht selbstständig entleert.

Wenn ein bestimmter Artikeltyp über die eigentliche Kommissionierreichweite hinaus im Pufferlager verbleibt, ist gegebenenfalls eine aktive Rücklagerung dieses Artikeltyps aus dem Pufferlager in das Kommissionierlager erforderlich. Die Rücklagerung erfordert Zeit. Restbestände, die im Pufferlager verbleiben, blockieren den Raum für neue Artikeltypen, die gemäß zukünftigen Befüllungsaufträgen eigentlich in das Pufferlager einzulagern wären. Dies ist nicht gewünscht. Deshalb wird die Befüllung der Lagerbehälter optimiert.

Vorzugsweise wird also die Verteilung der artikeltypspezifischen Pufferstückzahlen auf die Lagereinheiten unter Berücksichtigung von artikeltypspezifischen Volumina und Gewichten sowie von lagereinheitenspezifischen Abmessungen bestimmt. Optional können wiederum entsprechende Grenzwerte berücksichtigt werden.

Bei einer besonderen Ausgestaltung werden die artikeltypspezifischen Pufferstückzahlen für die ausgewählten Artikeltypen bestimmt, indem artikeltypspezifische durchschnittliche Bestückungszahlen mit der Kommissionierreichweite des Pufferlagers multipliziert werden.

Insbesondere weist das Pufferlager eine fixe physikalische Größe auf, die einer fixen Anzahl von (vorzugsweise einheitlichen) Lagereinheiten entspricht, die das Pufferlager maximal aufnehmen kann, wobei die fixe Anzahl der Lagereinheiten vorzugsweise durch eine weitere Analyse von mehreren Datensätzen von Altaufträgen bestimmt ist.

Die physische Größe des Pufferlagers wird in der Regel nur ein einziges Mal bestimmt, nämlich beim initialen Planen des Systems. Das Pufferlager kann zwar skalierbar ausgebildet sein, jedoch ist es wünschenswert, das Pufferlager möglichst lang ohne bauliche Änderungen zu betreiben. Der Betreiber/Anbieter sollte sich also initial für eine bestimmte Puffergröße entscheiden. Die Puffergröße wiederum sollte im Vergleich zu der Größe des Kommissionierlagers klein sein, weil das Pufferlager lediglich eine Kommissionierreichweite von wenigen Tagen hat. Unter einer Kommissionierreichweite ist eine Zeitdauer zu verstehen, innerhalb der eine Anzahl von Aufträgen aus einem Lager mit Artikel versorgt werden kann, ohne dass das Lager nachgefüllt wird. Es empfiehlt sich, das jeweilige Puffersortiment, dessen Bestückung sich zyklisch ändert, für viele Zyklen (Zyklusdauer beträgt vorzugsweise einen Tag) zu berechnen, um so einen Mittelwert bilden zu können, der allen Anforderungen gerecht wird. Selbstverständlich kann es in der Zukunft immer wieder zu Spitzen kommen, die eigentlich ein größeres Pufferlager erfordern. Jedoch kommt es auch immer wieder vor, dass das Pufferlager im Vergleich zum aktuellen Bedarf überdimensioniert ist. Hier wird ein Kompromiss gefunden.

Bei einer weiteren besonderen Ausgestaltung ist die Kommissioniersteuerung ferner eingerichtet, die Neuaufträge in pufferlagerreine, gemischte und kommissionierlagerreine Neuaufträge einzuteilen, wobei die pufferlagerreinen und gemischten Neuaufträge an der Arbeitsstation abgearbeitet werden und die kommissionierlagerreinen Neuaufträge an der Kommissionierstation abgearbeitet werden. Hier kommt wiederum die Wegzeitoptimierung zum Ausdruck. Artikel, die häufig benötigt werden, werden vorzugsweise aus dem Puffer bedient, der insbesondere A-Artikel hält. Die restlichen Artikel werden aus dem konventionellen Lager kommissioniert.

Weiter ist es von Vorteil, wenn das Pufferlager eine Lagereinheit-Speichereinrichtung, insbesondere einen Fördertechnikkreisel, auf dem die Lagereinheiten, die vorzugsweise übereinander gestapelt sind, endlos umlaufen, oder ein horizontal umlaufendes Karussell-Regal aufweist.

Außerdem kann eine Packstation vorgesehen sein.

Vorzugsweise beträgt ein Befüllungsauftrags-Erzeugungszyklus einen (Arbeits-)Tag.

Ferner ist es von Vorteil, wenn die Konsolidierungspuffer-Einrichtung ein Fachbodenregal, ein Durchlaufregal, eine Pick-to-Bucket-Anordnung oder ein endlos umlaufender Schalen-Sorter ist und ein Kommissionierleitsystem aufweist.

Außerdem ist es von Vorteil, wenn die Kommissioniersteuerung ferner eingerichtet ist, eine Lagerplatzverwaltung, eine Kommissionierführung und eine Auftragsverwaltung durchzuführen.

Die Aufgabe wird ferner gelöst durch ein Verfahren zum progressiven Kommissionieren von Artikeln gemäß Neuaufträgen in einem Lager- und Kommissioniersystem nach der Erfindung, mit folgenden Schritten: Analysieren einer Vielzahl von Neuaufträgen nach enthaltenen Artikeltypen; Einteilen der analysierten Neuaufträge in: pufferlagerreine Neuaufträge, die ausschließlich Artikeltypen enthalten, die im Pufferlager gelagert sind; gemischte Neuaufträge, die Artikeltypen enthalten, die im Pufferlager und im Kommissionierlager gelagert sind; und kommissionierlagerreine Neuaufträge, die Artikeltypen enthalten, die nur im Kommissionierlager gelagert sind; an der Arbeitsstation auftragsorientiertes Abarbeiten der Artikeltypen, die im Pufferlager gelagert sind und die in den pufferreinen und gemischten Neuaufträgen enthalten sind, durch Entnehmen, vorzugsweise aus den entsprechenden Lagereinheiten, zwecks direkt anschließender Verpackung oder durch Entnehmen und auftragsorientiertes Sammeln in der Konsolidierungspuffer-Einrichtung; auftragsorientiertes *Entnehmen* der Artikeltypen, die in den gemischten Neuaufträgen enthalten sind und die nur im Kommissionierlager gelagert sind, und auftragsorientiertes Zusammenführen mit den entsprechenden Artikeltypen von der Arbeitsstation; und Abarbeiten der kommissionierlagerreinen Neuaufträge durch Entnehmen der Artikeltypen aus dem Kommissionierlager zwecks direkt anschließender Verpackung.

Das Konzept der Erfindung zeichnet sich dadurch aus, dass die Aufträge in drei Kategorien eingeteilt werden. Die Kategorien entscheiden darüber, wo bzw. wie ein entsprechender Auftrag abgearbeitet wird.

Vorzugsweise weist das Verfahren ferner die Schritte auf: Erzeugen eines Befüllungsauftrags gemäß den oben erwähnten Schritten; und Transferieren von Artikeln, die hinsichtlich eines Artikeltyps und einer zugehörigen Stückzahl durch den Befüllungsauftrag bestimmt sind, aus dem Kommissionierlager in das Pufferlager.

Insbesondere weist das Verfahren die Schritte auf: Bestimmen eines aktuellen Füllzustands des Pufferlagers, bevor das Pufferlager gemäß dem Befüllungsauftrag aufzufüllen ist; Vergleichen des aktuellen Füllzustands mit einem gewünschten Füllzustand, der den Befüllungsauftrag entspricht; Bestimmen einer Differenz zwischen dem aktuellen und dem gewünschten Füllzustand; Bestimmen eines angepassten Befüllungsauftrags, der der Differenz entspricht; Transferieren der Artikel, die durch den angepassten Befüllungsauftrag bestimmt sind, aus dem Kommissionierlager in das Pufferlager; und Auffüllen und Nachfüllen der Lagereinheiten mit den Artikeln.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagram eines Lager- und Kommissioniersystems gemäß der Erfindung;
- Fig. 2: ein Blockdiagramm eines exemplarischen Auftrags bzw. eines Auftragsdatensatzes;
- Fig. 3: ein Blockdiagramm einer exemplarischen Kommissioniersteuerung;
- Fig. 4: ein Blockdiagramm zur Veranschaulichung eines Artikelflusses;
- Fig. 5: eine perspektivische Darstellung eines Pufferlagers und von zwei Arbeitsstationen;
- Fig. 6: eine perspektivische Darstellung einer Arbeitsstation mit einem Sorter als Konsolidierungspuffer-Einrichtung;
- Fig.7: Verteilungskurven artikeltypspezifischer Bestellhäufigkeiten;
- Fig. 8: eine Tabelle zu den Bestellhäufigkeiten der Fig. 7 und zur Erläuterung eines Befüllungsauftrags für das Pufferlager;
- Fig.9: einen Verlauf einer für das Pufferlager benötigen Anzahl von Lagereinheiten gemäß Daten aus der Vergangenheit zwecks Bestimmung einer physikalischen Gröβe des Pufferlagers;
- Fig. 10: einen Verlauf einer Dauer, die zum Befüllen des Pufferlagers benötigt wird;
- Fig.11: ein Flussdiagramm zum Erzeugen eines Befüllungsauftrags für das Pufferlager;
- Fig. 12: Detailschritte zum Diagramm der Fig.11;
- Fig. 13: ein Flussdiagramm eines Kommissionierverfahrens; und
- Fig. 14: einen Vergleich von benötigten Arbeitszeiten.

Wenn im Nachfolgenden von vertikalen bzw. horizontalen Orientierungen gesprochen wird, versteht es sich von selbst, dass Elemente und Merkmale, die mit diesen Orientierungen verknüpft sind, jederzeit durch eine entsprechende Drehung miteinander vertauscht werden können, so dass derartige Orientierungen nicht einschränkend zu verstehen sind. Des Weiteren sind gleiche Teile und Merkmale mit gleichen Bezugszeichen versehen. Die in der Beschreibung enthaltenen Offenbarungen sind sinngemäß auf gleiche Teile und Merkmale mit denselben Bezugszeichen übertragbar. Lage- und Orientierungsangaben (z.B. "oben", "unten", "seitlich", "längs", "horizontal", "vertikal" und Ähnliches) sind auf die unmittelbar beschriebene Figur bezogen. Bei einer Änderung der Lage oder Orientierung sind diese Angaben sinngemäß auf die neue Lage- bzw. Orientierung zu übertragen

Wie in der (Intra-)Logistik üblich, werden in Lager- und Kommissioniersystemen (Distributionsanlagen, Materialhandhabungsanlagen, etc.) eine Längsrichtung mit "X", eine Querrichtung mit "Z" und eine Höhenrichtung mit "Y" bezeichnet. Die Richtungen X, Y und Z definieren vorzugsweise ein kartesisches Koordinatensystem.

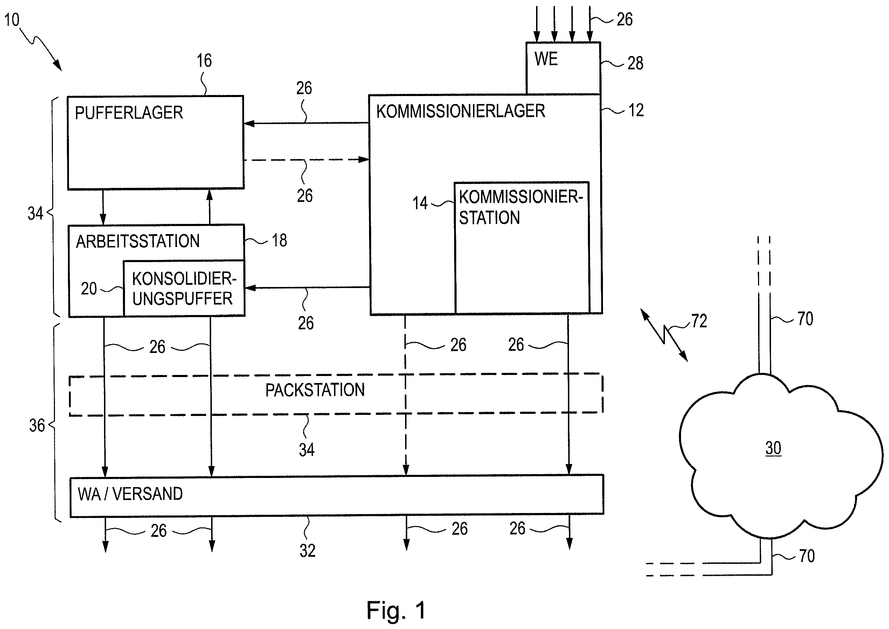

Die Fig. 1 zeigt ein Blockdiagramm eines Lager- und Kommissioniersystems 10 gemäß der Erfindung.

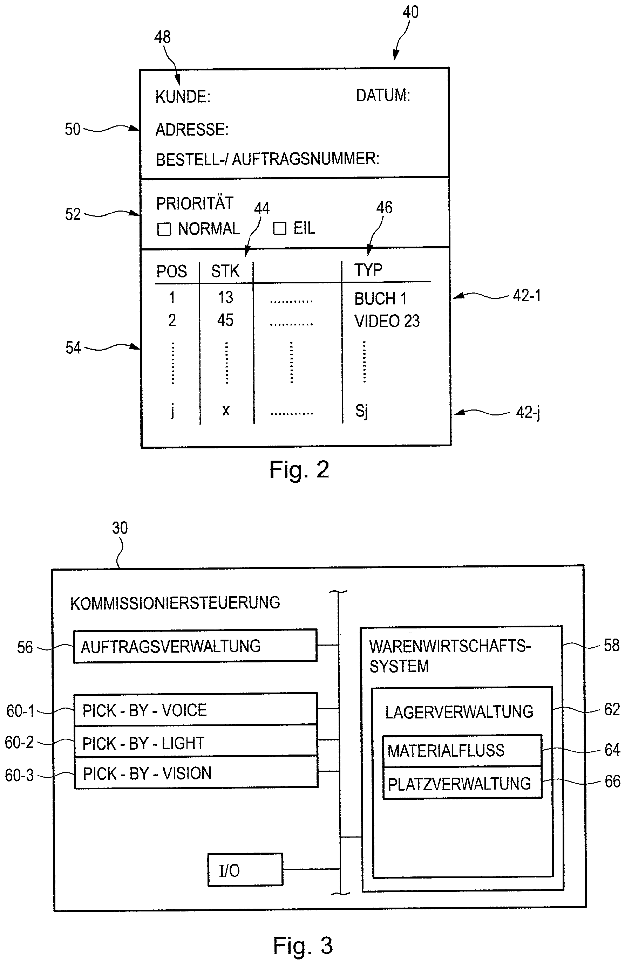

Das Lager- und Kommissioniersystem 10 (nachfolgend auch kurz als "System 10" bezeichnet) weist ein Kommissionierlager 12, mindestens eine Kommissionierstation 14, ein Pufferlager 16 und mindestens eine Arbeitsstation 18 mit einem Konsolidierungspuffer bzw. einer Konsolidierungspuffer-Einrichtung 20 auf. Beim Kommissionierlager 12 handelt es sich um ein konventionelles Lager, das zur Durchführung einer herkömmlichen Kommissionierung eingerichtet ist, wie es nachfolgend noch näher beschrieben werden wird. Das Kommissionierlager 12 hat die Funktion eines Langzeitlagers für Artikel 22 (nicht gezeigt) und dient als Nachschublager für das Pufferlager 16. Im Kommissionierlager 12 ist ein vollständiges Artikelsortiment 24 (nicht gezeigt) bevorratet. Das Kommissionierlager 12 kann exemplarisch durch Fachbodenregale, ein automatisiertes Kleinteilelager (AKL), Durchlaufregale, Karussellregale oder Ähnliches implementiert sein. Das Pufferlager 16 hat die Funktion eines Kurzzeitlagers für die Artikel 22. Im Pufferlager 16 wird nur ein sehr kleiner Teil des Artikelsortiments 24, vorzugsweise die "besten" A-Artikel, vorübergehend bereitgestellt. Das Pufferlager 16 ist vorzugsweise so dimensioniert, dass 1-10 %, insbesondere 1,5-6 %, der Artikeltypen 46 (Fig. 2) des gesamten Artikelsortiments 24 auch im Pufferlager 16 bevorratet sind.

Unter einem "Artikel" wird nachfolgend eine Bestands- bzw. Kommissioniereinheit innerhalb des Lager- und Kommissioniersystems 10 verstanden. Die Kommissioniereinheit, die auch als Lagergut bezeichnet wird, kann ein Lagerladehilfsmittel sowie den Artikel 22 selbst umfassen. Die Kommissioniereinheit kann aber auch nur den Artikel 22 umfassen, wenn kein Lagerladehilfsmittel vorhanden ist. Als (Lager-)Ladehilfsmittel werden z.B. Paletten, Behälter, Kartons, Tablare, (Hänge-)Taschen oder Ähnliches eingesetzt. Unter einem "Artikel" ist insbesondere ein Stückgut zu verstehen. Die Artikel 22 sind durch Artikeltyp 46 (siehe Fig. 2) unterscheidbare (kleinste) Einheiten des Artikelsortiments 24. Stückgüter sind individualisierte, unterscheidbare Artikel, die einzeln gehandhabt werden können und deren Bestand stückweise oder als Gebinde (Case) geführt wird. Ein "Gebinde" ist ein allgemeiner Begriff für eine handhabbare Einheit, die manuell oder mittels technischem Gerät (z.B. Fördertechnik, Regalbediengerät, Lastaufnahmemittel, etc.) bewegt werden kann. Die Begriffe "Artikel", "Gebinde", "Lagergut", "Kommissioniereinheit", "Bestandseinheit" und "Stückgut" werden nachfolgend äquivalent verwendet.

Um die Artikel 22 innerhalb des Systems 10 zu bewegen, können verschiedene Typen von Förderern zum Einsatz kommen (z.B. Rollenförderer, Gurtförderer, Kettenförderer, Hängeförderer, Riemenförderer, Bandförderer, etc.), die in der Fig. 1 nicht gezeigt sind. Die Begriffe "Förderer" und "Fördertechnik" werden nachfolgend äquivalent benutzt. Eine Fördertechnik umfasst im Wesentlichen alle technischen und organisatorischen Einrichtungen (z.B. Antriebe, Sensoren, Weichen, Steuerungselemente, etc.) zum Bewegen oder Transportieren der Artikel 22 und zum Lenken von Material- und Artikelströmen 26.

Die Artikelströme 26 sind in der Fig. 1 durch Pfeile angedeutet. Die Artikel 22 treten über einen Wareneingang (WE) 28 in das System 10 ein. Der Wareneingang 28 ist materialflusstechnisch mit dem Kommissionierlager 12 verbunden. Die Artikel 22 werden im Wareneingang 28 vereinnahmt und anschließend im Kommissionierlager 12 eingelagert. Wenn es erforderlich ist, können die Artikel 22 aus dem Wareneingang 28 auch direkt in das Pufferlager 16 eingelagert werden. Jedoch stammen die Artikel 22 im Pufferlager im Wesentlichen aus dem Kommissionierlager 12. Ein kleiner Teil der Artikel 22 wird zyklisch mit einer sich ständig ändernden Zusammensetzung (Artikeltyp und Stückzahl) vom Kommissionierlager 12 ausgelagert und gemäß einem Befüllungsauftrag in das Pufferlager 16 eingelagert. Die umgelagerten Artikel 22 sind dann sowohl im Kommissionierlager 12 als auch im Pufferlager 16 vorhanden. Im Normalfall erfolgt keine Rücklagerung der Artikel 22 vom Pufferlager 16 ins Kommissionierlager 12. Im Normalfall werden die Artikel 22, die in das Pufferlager 16 transferiert wurden, im Bereich des Pufferlagers 16 "verbraucht". Nur in Ausnahmefällen werden Restartikel vom Pufferlager 16 in das Kommissionierlager 12 zurückgelagert, wie es durch einen Strichlinienpfeil angedeutet ist.

Im Kommissionierlager 12 erfolgt die herkömmliche Kommissionierung, bevorzugt von Bund/oder C-Artikeln. Eine räumliche Anordnung/Verteilung der Artikel 22 im Kommissionierlager 12 erfolgt z.B. in Abhängigkeit von deren Zugriffshäufigkeiten. Die Zugriffshäufigkeit selbst wird üblicherweise kategorisiert. Unter der "Zugriffshäufigkeit" versteht man allgemein eine Zahl von Anforderungen eines Artikeltyps 46 pro Zeiteinheit. Eine Kategorisierung bzw. Klassifizierung kann alternativ auch in Abhängigkeit von Absatzmengen, Umschlagshäufigkeiten oder anderen Kriterien erfolgen. Man spricht in diesem Zusammenhang auch von der eingangs bereits erwähnten ABC-Verteilung. Eine Sortierung bzw. Anordnung des Artikelsortiments 24 nach Zugriffshäufigkeiten kann durch eine sogenannte Lorenz-Kurve ausgedrückt werden. Analog wird auch der Begriff "Pareto"-Verteilung benutzt. Es ist üblich, dass die räumliche Anordnung und Verteilung der Artikel 22 des Artikelsortiments 24 schon während einer Planungsphase des Kommissionierlagers 12 berücksichtigt und später entsprechend umgesetzt wird. Daher ist es äußerst schwierig, situativ darauf zu reagieren, wenn sich die Zugriffshäufigkeiten der Artikel 22 des Sortiments 24 häufig und/oder kurzfristig während eines Systembetriebs ändern, wie es insbesondere im Bereich des E-Commerce der Fall ist.

Unter "Schnelldrehern" (bzw. "Schnellläufern") bzw. "Langsamdrehern" (bzw. "Langsamläufern") werden nachfolgend A-Artikel bzw. B- oder C-Artikel des Artikelsortiments 24 verstanden. A-Artikel haben hohe Absatzmengen, Umschlagraten oder Zugriffhäufigkeiten, C-Artikel haben geringe. Die Grenzen zwischen A-, B- und C-Artikeln werden im Einzelfall festgelegt. Es versteht sich, dass die Langsamdreher auch um die Mitteldreher ("B-Artikel") erweitert werden können.

E-Commerce-Händler haben oft ein sehr großes Artikelsortiment 24 (30.000 bis 200.000 verschiedene Artikeltypen 46 sind nicht selten). Eine Wahrscheinlichkeit, dass sich eine Zugriffshäufigkeit eines der Artikeltypen 46 ändert, ist hoch, weil sich im E-Commerce die Zugriffshäufigkeiten der Artikel durch Kundenverhalten (Hypes) oder gesteuert durch Werbung oder Sonderpreisaktionen ändern. Ein weiterer Aspekt sind die (teilweise bewusst werblich genutzten) Kaufanlässe wie z.B. Weihnachten, Ostern, Muttertag, Vatertag, Valentinstag, Ferienbeginn, Schuljahresbeginn oder Ähnliches. Während einer Angebotsphase ist die Zugriffshäufigkeit auf einen der Artikeltypen 46, der gerade angeboten wird, in der Regel höher als während einer Phase, in der der gleiche Artikeltyp 46 nicht im Sonderangebot ist. Konventionelle Lager- und Kommissioniersysteme sind nicht in der Lage, ausreichend flexibel und kurzfristig auf Zugriffshäufigkeitsschwankungen innerhalb der Artikel 22 des Sortiments 24 zu reagieren. Insbesondere bei E-Commerce-Anwendungen ergeben sich die nachfolgend aufgeführten Schwierigkeiten:
- Ein Versand muss am gleichen Tag erfolgen, wie eine Bestellung eingeht, wobei ein Zeitpunkt, zu dem eine Bestellung zuletzt möglich ist, sehr knapp vor der eigentlichen Auslieferung liegen kann.
- Eine ABC-Struktur ändert sich hinsichtlich der beteiligten Artikeltypen oft und häufig.
- Generell können sehr diverse Artikelsortimente vorliegen (z.B. von kleinteiligen Modeaccessoires bis hin zu großen Möbelstücken oder schweren Maschinen wie Waschmaschinen).
- Es gibt extreme Spitzenbelastungen (z.B. während der Vorweihnachtszeit, vor Ostern oder dgl.).
- Viele Lieferungen werden retourniert (z.B. weil eine Schuhgröße nicht passt). Diese Retourwaren müssen wieder in das System eingegliedert werden, um später erneut in einer anderen Bestellung ausgeliefert werden zu können.
- Wünsche der Kunden sind schwer vorhersagbar.
- Ein schneller Return-of-Invest (ROI) ist seitens des Anlagenbetreibers/Anbieters gewünscht.

Die herkömmliche Kommissionierung der Artikel 22 des Kommissionierlagers 12 der Fig. 1 erfolgt an einer oder mehreren Kommissionierstationen 14. In der Fig. 1 ist die Kommissionierstation 14 im Bereich des Kommissionierlagers 12 angeordnet. Es versteht sich, dass die Kommissionierstation(en) 14 auch entfernt zum Kommissionierplatz 12 angeordnet sein kann bzw. können. Es kann nach unterschiedlichen Prinzipien kommissioniert werden.

Heutzutage wird grob zwischen zwei verschiedenen Kommissionierprinzipien unterschieden, gemäß denen an den Kommissionierstationen 14 gearbeitet werden kann. Es wird entweder nach dem "Mann-zur-Ware"-Prinzip oder nach dem "Ware-zum-Mann"-Prinzip kommissioniert. Die vorliegende Erfindung kann gemäß jedem der Prinzipien, auch in Kombination, betrieben werden, wobei eine Kommissionierperson (nicht gezeigt) soweit wie möglich unterstützt wird. Die Kommissionierung kann manuell oder automatisiert erfolgen.

Beim herkömmlichen Kommissionieren wird häufig nach dem Prinzip "Mann-zur-Ware" kommissioniert. Dabei bewegt sich die Kommissionierperson zum Zwecke des Kommissionierens in einem (dezentralen) Bereich des Lagers 12, wobei Bereitstellungseinheiten (z.B. Lagerbehälter, Tablare, Kartons, Paletten, etc.) an stationären Orten innerhalb des Lagers 12 an Zugriffsplätzen bevorratet und bereitgestellt sind. In Übereinstimmung mit einem Kommissionierauftrag 40 werden die kundenseitig vorgegebenen Artikel 22 nach Typ 46 und Anzahl zusammengestellt, indem sie eingesammelt werden. Die Kommissionierperson entnimmt den oder die gewünschten Artikel 22 und legt sie in eine Sammeleinrichtung (Wagen, Behälter, Karton, etc.).

Alternativ werden bei dem "Ware-zum-Mann"-Prinzip die zu kommissionierenden Artikel 22 zu der Kommissionierperson hin transportiert, damit die Kommissionierperson, die nachfolgend auch als "Kommissionierer" bezeichnet werden wird, aus Gründen einer besseren Ergonomie möglichst wenig bis gar nicht laufen muss, um einen Kommissioniervorgang (Entnehmen der Artikel aus einer Quelle und Abgeben an ein Ziel) durchzuführen. Die zu kommissionierenden Artikel 22 werden innerhalb des Systems 10 transportiert, insbesondere von und zu den Kommissionierstationen 14. In diesem Fall werden Systeme mit dynamischer Artikelbereitstellung eingesetzt, wobei die Kommissionierperson üblicherweise eine ortsfeste Kommissionierstation 14 besetzt und dort über eine Fördertechnik mit den Artikeln 22 versorgt wird.

Alternativ können Lagerbehälter 80 statisch in Regalen stehen und Sammeleinrichtungen für die Aufträge dynamisch an den Lagerbehältern im Regal vorbeigeführt werden. Die Sammeleinrichtungen können durch Auftragsbehälter auf einer Fördertechnik oder durch Schalen eines Schalenförderers realisiert sein, die am Ende der Förderstrecke in den Auftragsbehälter gekippt werden.

Außerdem gibt es eine Vielzahl von verschiedenen Kommissionierleitstrategien, die mit Begriffen wie z.B. "Pick-to-Belt", "Pick-by-Light", "Put-to-Light" bezeichnet werden.

Die Kommissionierleitstrategie bzw. Kommissionierführung "Pick-by-Light" bietet signifikante Vorteile gegenüber klassischen, manuellen Kommissioniertechniken. Bei Pick-by-Light-Systemen befindet sich an jedem Zugriffsplatz (Quelle) eine Signallampe mit einem Ziffern- oder auch alphanummerischen Display sowie mit mindestens einer Quittiertaste und eventuell Eingabe- bzw. Korrekturtasten. Wenn ein Auftragsbehälter, in den hinein die Artikel 22 abgelegt werden, an einer Kommissionierposition ankommt, so leuchtet an demjenigen Zugriffsplatz (Quelle), aus welchem die Artikel 22 zu entnehmen sind, die Signallampe auf. Auf dem Display erscheint die zu entnehmende Anzahl. Die Entnahme wird dann mittels der Quittiertaste bestätigt, und die Bestandsänderung kann in Echtzeit an ein Lagerverwaltungssystem 62 (Fig. 2) zurückgemeldet werden. Oft arbeiten Pick-by-Light-Systeme nach dem Prinzip "Mann-zur-Ware". Bei "Put-to-Light"-System wird der Ziel- bzw. Abgabeort optisch angezeigt.

Des Weiteren ist im Kommissionierlager 12 eine beleglose Kommissionierung mittels "Pick-by-Voice" möglich. Dort findet eine Kommunikation zwischen einer Kommissioniersteuerung 30 (Datenverarbeitungsanlage) und der Kommissionierperson mittels Sprache statt. Anstatt ausgedruckter Kommissionierlisten oder Datenfunkterminals (d.h. mobile Datenerfassungseinheiten (MDE), arbeitet die Kommissionierperson meistens mit einem Headset (Kopfhörer und Mikrofon), welches z.B. an einen handelsüblichen Pocket-PC angeschlossen werden kann. Die Aufträge 40 (Fig. 2) werden von dem Lagerverwaltungssystem 62 mittels Funk, meist mittels WLAN/WiFi, an die Kommissionierperson übermittelt.

Ferner unterscheidet man beim Kommissionieren aufgrund der gewählten Strategie zwischen auftrags- und artikelbezogenem Kommissionieren, wobei das Zusammenstellen der Artikel 22 selbst entweder seriell, also nacheinander, oder parallel, also gleichzeitig stattfinden kann. Beim auftragsbezogenen Kommissionieren wird ein Auftrag 40 als Ganzes bearbeitet, d.h. alle Artikel 22 des Auftrags 40 werden seriell zusammengestellt. Beim artikelbezogenen Kommissionieren dagegen werden mehrere Aufträge 40 von der Kommissionierperson parallel bearbeitet, die jeweils nur einen Teil der Aufträge 40 zusammenstellt bzw. sucht, nämlich den gerade zu bearbeitenden Artikel.

Da der Kommissionierer beim "Ware-zum-Mann"-Prinzip eigentlich nicht mehr laufen muss, weil die zu kommissionierenden Stückgüter direkt zu ihm hin transportiert werden, werden die Kunden- bzw. Kommissionieraufträge häufig parallel abgearbeitet, was als "Batch-Picking" bezeichnet wird. Beim "Batch-Picking" werden mehrere Kundenaufträge artikelorientiert zusammengefasst, um möglichst wenige SKUs (Stock Keeping Unit) aus einem der Lager 12 oder 16 auslagern und nach einer erfolgten Kommissionierung in das Lager 12 oder 16 zurückbewegen zu müssen. Bei der artikelorientierten Analyse der Aufträge 40 schaut man auf eine Gruppe von Kundenaufträgen, die alle Bestellungen (Auftragszeilen) enthalten, die einen bestimmten Artikeltyp 46 betreffen und erzeugt dann artikelorientierte Transportbefehle für die SKUs. Die SKU, die diesem jeweiligen Artikeltyp 46 entspricht, wird dann ausgelagert und zur Station 14 oder 18 transportiert. An der Station 14 oder 18 greift der Kommissionierer alle Artikel 22 des jeweiligen Artikeltyps 40 und gibt sie in einer vorgegebenen Anzahl an entsprechend vorgesehene Zielstellen ab. Dieser Vorgang wird auch als "Entnahme" bezeichnet, unabhängig davon, ob die Artikel 22 mit oder ohne LHM bereitgestellt werden.

Jedem Ziel bzw. jeder Zielstelle ist einer der Kommissionieraufträge 40 zugeordnet, so dass die Abgabe der Artikel 22 auftragsorientiert erfolgt. Die Zielstellen werden an den Stationen 14 oder 18 so lange vorgehalten, bis alle Artikeltypen 46 des zugehörigen Kommissionierauftrags 40 an die Zielstelle gegeben wurden. Man spricht in diesem Zusammenhang auch generell von einer zweistufigen Kommissionierung.

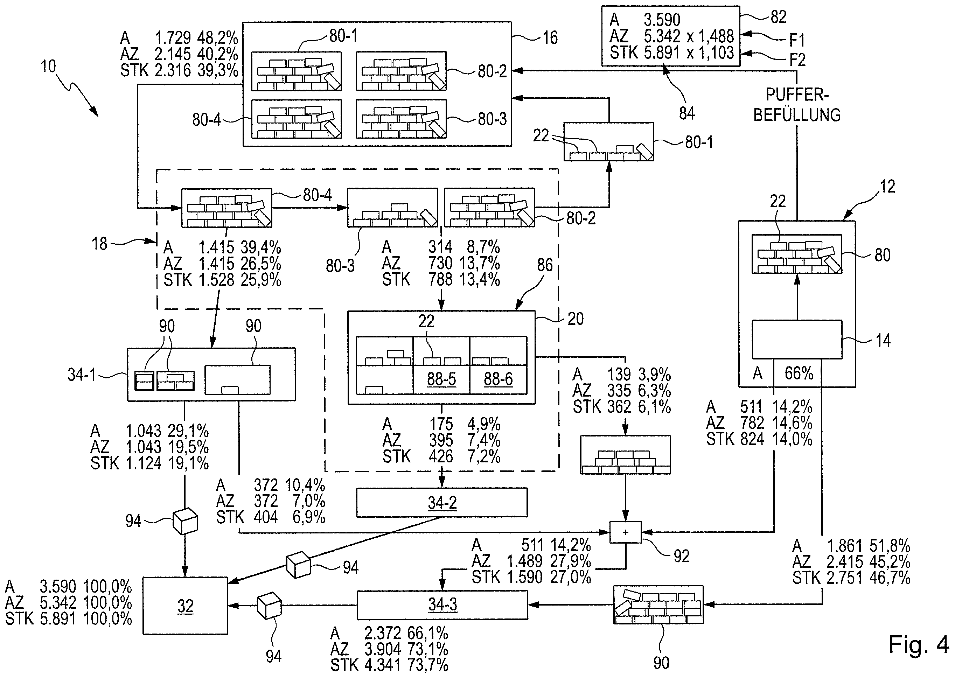

Auf welche Art und Weise im System 10 kommissioniert wird, kann von vielen Faktoren abhängen. Ein Faktor, der eine Rolle spielen kann, ist eine durchschnittliche Auftragsstruktur 84 (Fig. 4). Es macht einen Unterschied, ob verschiedene Artikel 22 in kleinen Mengen zu kommissionieren sind oder ob immer wieder die gleichen Artikel 22 in großen Mengen zu kommissionieren sind.

Zurückkehrend zur Fig. 1 werden, wenn die Kommissionierung an der Arbeitsstation 18 und/oder der Kommissionierstation 14 abgeschlossen ist, die fertig kommissionierten Artikel 22 in einen Warenausgang (WA) bzw. Versand 32 transferiert, von wo aus die Artikel 22 ihre Reise zu den Kunden antreten. Optional können auch eine oder mehrere Packstationen 34 vorgesehen sein, wo die fertig kommissionierten Artikel 22 gepackt und/oder in Versandträger (nicht gezeigt) umgepackt werden. In der Fig. 1 ist eine exemplarische Packstation 34 durch eine Strichlinie zwischen einem Lager- und Kommissionierbereich 34 und einem Pack- und Versandbereich 36 gezeigt.

In Fig. 2 ist ein exemplarischer Kommissionierauftrag 40 gezeigt. Der (Kommissionier-)"Auftrag" 40 besteht aus einer oder mehreren Auftragspositionen, die auch als Auftragszeilen 42 bezeichnet werden. Jede der Auftragszeilen 42 gibt eine jeweilige Stückzahl/Menge 44 eines Artikeltyps 46 an, den ein Kunde 48 bestellt hat. Ein Altauftrag 40 ist ein Auftrag 40, der in der Vergangenheit bereits abgearbeitet, d.h. erledigt und fertiggestellt wurde. Ein Neuauftrag 40 ist ein Auftrag 40, der in der Zukunft bearbeitet werden soll.

Die Aufträge 40 liegen als Datensätze vor. Jeder der Datensätze kann ein Kopffeld 50, ein (optionales) Prioritätsfeld 52 und/oder ein Artikelfeld 54 aufweisen. Das Kopffeld 50 kann u.a. Informationen zum Kunden 48, der eine Bestellung aufgegeben hat, eine (Kunden-)Adresse oder eine (Kunden-)Identifikationsnummer sowie eine Bestell-/Auftragsnummer aufweisen. Das Prioritätsfeld 50 enthält Angaben darüber, ob es sich um einen normalen Auftrag oder einen Eilauftrag handelt. Ein Eilauftrag ist ein Auftrag 40 mit hoher (Bearbeitungs-)Priorität, der üblicherweise vorrangig vor normalen Aufträgen 40 behandelt wird. Das Artikelfeld 54 weist die Auftragszeilen 42 auf. Jede der Auftragszeilen 42 weist zumindest Angaben über die zugehörige Stückzahl 44 eines bestellten Artikels 22 und über seinen Artikeltyp 46 auf.

Eine Koordinierung der Abarbeitung der Aufträge 40 übernimmt ein Auftragsabwicklungssystem bzw. eine Auftragsverwaltung 56 (Fig. 3), die meist in die Kommissioniersteuerung 30 integriert ist, die z.B. auch ein Warenwirtschaftssystem 58 aufweisen kann. Die Auftragsabwicklung erfolgt üblicherweise computergestützt mittels des Auftragsabwicklungssystems 56.

Fig. 3 zeigt ein Blockdiagramm der Kommissioniersteuerung 30. Die Kommissioniersteuerung 30 kann ferner eine (Lager-)Platzverwaltung 62 sowie eine Informationsanzeige integriert haben. Die Kommissioniersteuerung 30 ist üblicherweise durch eine Datenverarbeitungsanlage realisiert, die vorzugsweise zur verzögerungsfreien Datenübertragung und Datenverarbeitung im Online-Betrieb arbeitet. Die Kommissioniersteuerung 30 kann eine zentrale oder dezentrale Struktur aufweisen. Die Kommissioniersteuerung 30 kann modular aufgebaut sein und folgende Funktionen implementieren: die Auftragsverwaltung 56, die Umsetzung der Kommissionierleitstrategien 60, das Warenwirtschaftssystem 58, welches wiederum die Lagerverwaltung 62 umfassen kann, die wiederum den Materialfluss 64 sowie die (Lager-)Platzverwaltung 66 beinhalten kann, und/oder eine Schnittstellenverwaltung 68. Diese Funktionen werden in Form von Software und/oder Hardware implementiert. Eine Kommunikation kann über Leitungen 70 oder drahtlos (Pfeil 70) erfolgen, wie in Fig. 1 gezeigt.

Die Auftragsverwaltung 56 der Fig. 3 sorgt dafür, dass von Kunden 48 eingehende (Kommissionier-)Aufträge 40 zur Erledigung (Abarbeitung) auf die Stationen 14 und/oder 18 verteilt werden. An der Station 14 spielen Faktoren wie Auslastung, Stückgutsortimentsverteilung, (Förder-)Wegoptimierungen und Ähnliches eine Rolle. Die Stationen 14 und 18 können komplette Aufträge 40, aber auch nur Teilaufträge zur Abarbeitung zugewiesen bekommen. Nicht alle Artikeltypen 46 eines Kommissionierauftrags 40 müssen aber an der gleichen Station 14 oder 18 kommissioniert werden.

Fig. 4 zeigt ein Blockdiagramm zur Veranschaulichung eines Artikel- bzw. Materialflusses in einem exemplarischen System 10, das wie das System 10 der Fig. 1 strukturiert sein kann. Zur Vereinfachung der Darstellung sind nicht alle Elemente des Systems 10 der Fig. 1 in der Fig. 4 dargestellt. So fehlt beispielsweise der Wareneingang 28.

In der Fig. 4 ist der Materialfluss bzw. der Artikelfluss durch Pfeile zwischen den beteiligten Blöcken angedeutet. Die Quelle aller Artikel 22 innerhalb des Systems 10 stellt das Kommissionierlager 12 dar. Innerhalb des entsprechenden Blocks ist eine exemplarische Lagereinheit in Form eines (einzigen) Lagerbehälters 80 gezeigt. Es versteht sich, dass eine Vielzahl von Lagerbehältern 80 im Lager 12 eingesetzt wird. Eine Lagereinheit stellt eine Einheit dar, die zum Bevorraten der Artikel 22 dient. Die Lagereinheit ist aber auch eine rechnerische Standardgröße, um die physikalische Größe der Läger 12 und 16 auszudrücken. Vorzugsweise werden in den Lägern 12 und 16 die gleichen Lagereinheiten benutzt.

Die Artikel 22 sind vorzugsweise artikeltyprein in den Lagerbehältern 80 bevorratet. Dies bedeutet, dass die Lagerbehälter 80 jeweils nur Artikel 22 eines einzigen Artikeltyps 46 speichern. Es versteht sich, dass andere Lagerladehilfsmittel eingesetzt werden können, wie zum Beispiel Tablare, Taschen, Kartons, Paletten, oder Ähnliches. Regale, Regalanordnungen oder andere Speichereinrichtungen zum Bereitstellen der Lagerbehälter 80 sind aus Gründen einer vereinfachten Darstellung nicht gezeigt. Die Kommissionierstation 14 ist hier innerhalb des Bereichs des Kommissionierlagers 12 angeordnet. An der Kommissionierstation 14 wird beispielsweise manuell nach dem Mann-zur-Ware-Prinzip kommissioniert, indem die Kommissionierpersonen mit Kommissionierwägen durch das Kommissionierlager 12 fahren bzw. laufen. Die Kommissionierwägen (nicht gezeigt) sind beispielsweise mit Auftragsbehältern (nicht gezeigt) bestückt. Die Kommissionierpersonen entnehmen die Artikel 22 aus den Lagerbehältern 80 und geben sie in die Auftragsbehälter ab. Die Entnahme und Abgabe, d.h. das Kommissionieren, erfolgt gemäß den Kommissionieraufträgen 40, z.B. mittels Pick-by-Voice.

Der Block 82 dient zur Verdeutlichung einer Auftragsstruktur 84. Die in der Fig. 4 gezeigte Auftragsstruktur 84 weist exemplarisch 3590 Aufträge (A) auf. Diese 3590 Aufträge setzen sich aus 5342 Auftragszeilen (AZ) zusammen. Die 3590 Aufträge definieren 5891 Stück (STK), wobei ein (einziges) Stück mit einer Bestandseinheit bzw. einem Artikel 22 gleichzusetzen ist. Die Faktoren F1 und F2 bringen Verhältnisse zwischen den Aufträgen 40, Auftragszeilen 42 und den Stückzahlen 44 zum Ausdruck. Der Faktor F1 beträgt hier ca. 1,49 und gibt eine durchschnittliche Anzahl von Auftragszeilen 42 pro Auftrag 40 an. Der Faktor F2 beträgt hier ca. 1,1 und gibt eine durchschnittliche Stückzahl 44 pro Auftragszeile 42 an. Beide Faktoren F1 und F2 liegen in einer Größenordnung von 1 und sind deshalb vergleichsweise gering. Die Größenordnung von 1 deutet an, dass die hier betrachtete Auftragsstruktur 84 aus dem Bereich des E-Commerce (B2C, Business-to-Customer) stammt. Bei B2B (Business-to-Business)-Anwendungen wären die Faktoren F1 und F2 bedeutend größer.

Im Pufferlager 16 der Fig. 4 sind exemplarisch vier Lagerbehälter 80-1 bis 80-4 gezeigt. Es versteht sich, dass die (Gesamt-)Anzahl der Lagerbehälter 80 im Pufferlager 16 durch die physische Größe des Pufferlagers 12 begrenzt ist. Auf die Dimensionierung des Pufferlagers 16 wird später noch genauer eingegangen werden.

Das Pufferlager 16 versorgt die Arbeitsstation 18 mit den Lagerbehältern 80-1 bis 80-4. In der Fig. 4 ist ein Kreislauf der Lagerbehälter 80-1 bis 80-4 gezeigt, da die Lagerbehälter 80 mehrmals am Tag durch den Bereich der Arbeitsstation 18 hindurchgeführt werden können, insbesondere wenn die Aufträge 40 blockweise bearbeitet werden. In der Fig. 4 ist eine Momentaufnahme gezeigt, bei der der Lagerbehälter 80-1 die Arbeitsstation 18 bereits passiert hat und rückgelagert wird, während die Lagerbehälter 80-2 bis 80-4 sich noch im Bereich der Arbeitsstation 18 befinden und bearbeitet werden. Die Lagerbehälter 80-2 und 80-3 befinden sich im Bereich der Konsolidierungspuffer-Einrichtung 20 zur Abarbeitung mehrzeiliger Aufträge 40.

Die Konsolidierungspuffer-Einrichtung 20 ist hier zum Beispiel als Regal 86 mit Regalfächern 88 implementiert. Vier der sechs Regalfächer 88 sind bereits mit Artikeln 22 bestückt, die zu unterschiedlichen Artikeltypen 46 gehören können. Die Regalfächer 88-5 und 88-6 sind (noch) leer. Es versteht sich, dass mehr oder weniger Regalfächer 88 im Regal 86 vorgesehen werden können. Jedem der Regalfächer 88 ist einer der Aufträge 40 zugewiesen. Die Gesamtzahl der Regalfächer 88 bzw. Ziel(Puffer)stellen kann vorab bestimmt werden, wie es nachfolgend noch näher erläutert werden wird. Üblicherweise werden 20 bis 100 Pufferstellen bereitgestellt. Im Bereich des Regals 88 bzw. des Konsolidierungspuffers 20 wird vorzugsweise mit "Pick-by-Light"- und "Put-to-Light"-Leitstrategien gearbeitet.

Der Lagerbehälter 80-4 befindet sich ebenfalls im Bereich der Arbeitsstation 18. Die Artikel 22 aus dem Lagerbehälter 80-4 werden direkt entnommen, nicht gepuffert, sondern direkt verpackt, wie es nachfolgend noch erläutert werden wird, weil es sich um einzeilige Aufträge 40 handelt.

Der eben erwähnte Kreislauf dient der Bearbeitung von "pufferlagerreinen" und "gemischten" Aufträgen 40. Diese Aufträge 40 machen in dem Beispiel der Fig. 4 48,2 % aller Aufträge 40 aus. Dies entspricht 40,2 % der Auftragszeilen 42 bzw. 39,3 % der Stückzahlen 44.

66 % aller Aufträge 40 stellen "kommissionierlagerreine" und "gemischte" Aufträge 40 dar. Dies ist durch die in der Fig. 4 rechts dargestellten Artikelströme angedeutet, die das Kommissionierlager 12 nach unten in Richtung einer Packstation 34-3 und eines Vereinigungspunkts 92 verlassen.

34 % aller Aufträge 40 stellen "pufferlagerreine" Aufträge 40 dar.

14,2 % aller Aufträge 40 stellen "gemischte" Aufträge dar. 14,2 % aller Aufträge 40 benötigen also sowohl Artikel 22, die im Kommissionierlager 12 gelagert sind, als auch Artikel 22, die im Pufferlager 16 gelagert sind.

51,8 % aller Aufträge 40 stellen "kommissionierlagerreine" Aufträge 40 dar, benötigen also Artikel 22 nur aus dem Lager 12.

29,1 % aller Aufträge 40 weisen nur eine einzige Auftragszeile 42 auf. Diese einzeiligen Aufträge 40 werden aus dem Lagerbehälter 80-4 bedient, der später auch zur Bearbeitung von mehrzeiligen Aufträgen 40 genutzt werden kann. Im Beispiel der Fig. 4 sind insgesamt 1043 Aufträge einzeilig, die insgesamt 1124 Stück benötigen. Dies bedeutet, dass einige der einzeiligen Aufträge 40 mehr als 1 Stück benötigen. Die Artikel 22 werden aus dem Lagerbehälter 80-4 auftragsorientiert, d.h. in der richtigen Stückzahl, entnommen und in entsprechende Versandbehälter 90 (z.B. Karton, Sammelbehälter, Palette, etc.) gegeben.

Das Verpacken der einzeiligen Aufträge 40 erfolgt in der Fig. 4 im Bereich der Packstation 34-1. Dort sind exemplarisch drei Versandbehälter 90 gezeigt, die jeweils mit einer unterschiedlichen Anzahl 44 von Artikeln 22 beladen sind. Obwohl die Packstation 34-1 getrennt von der Arbeitsstation 18 dargestellt ist, versteht es sich, dass die Schritte des Entnehmens, Umpackens und Verpackens alle im Bereich der Arbeitsstation 18 durchgeführt werden können. Dies bedeutet mit anderen Worten, dass die Packstation 34-1 in die Arbeitsstation 18 integriert sein kann. Das gleiche gilt für die Packstation 34-2, die zum Fertigstellen der Aufträge 40 benutzt wird, die mehrere Auftragszeilen 42 mit unterschiedlichen Artikeltypen 46 aufweisen, wobei alle Artikeltypen 46 im Pufferlager 16 bevorratet sind.

4,9 % aller Aufträge 40 sind mehrzeilig und werden ausschließlich aus dem Lager 16 versorgt.

3,9 % aller Aufträge 40 werden ebenfalls über den Konsolidierungspuffer 20 vorkommissioniert, um später mit den Artikeln 22 aus dem Kommissionierlager 12 und mit den (einzeiligen) Artikeln 22 zusammengeführt zu werden. Die Artikel 22 der gemischten Aufträge 40, die aus dem Pufferlager 16 und dem Kommissionierlager 12 stammen, werden an einem Punkt 92 zusammengeführt und werden an der Packstation 34-3 gepackt und versandfertig gemacht. Es versteht sich, dass die Packstation 34-3 wiederum in die Arbeitsstation 18 integriert sein kann.

Die fertig kommissionierten und versandfertig gepackten einzeiligen pufferlagerreinen Aufträge 40 (29,1 %) verlassen das System über den Warenausgang 32, zum Beispiel in Paketen 94. Das gleiche gilt für die mehrzeiligen pufferlagerreinen Aufträge 40 (4,9 %), die von der Packstation 34-2 kommen. Die gemischten Aufträge 40 (14,2 %) und die kommissionierlagerreinen Aufträge 40 (51,8 %) kommen von der dritten Packstation 34-3 (66 %).

Es versteht sich, dass auch nur eine einzige Packstation 34 vorgesehen sein kann, die innerhalb oder außerhalb des Bereichs der Arbeitsstation 18 angeordnet sein kann. Die Fig. 4 zeigt lediglich eine beispielhafte Ausgestaltung des Systems 10.

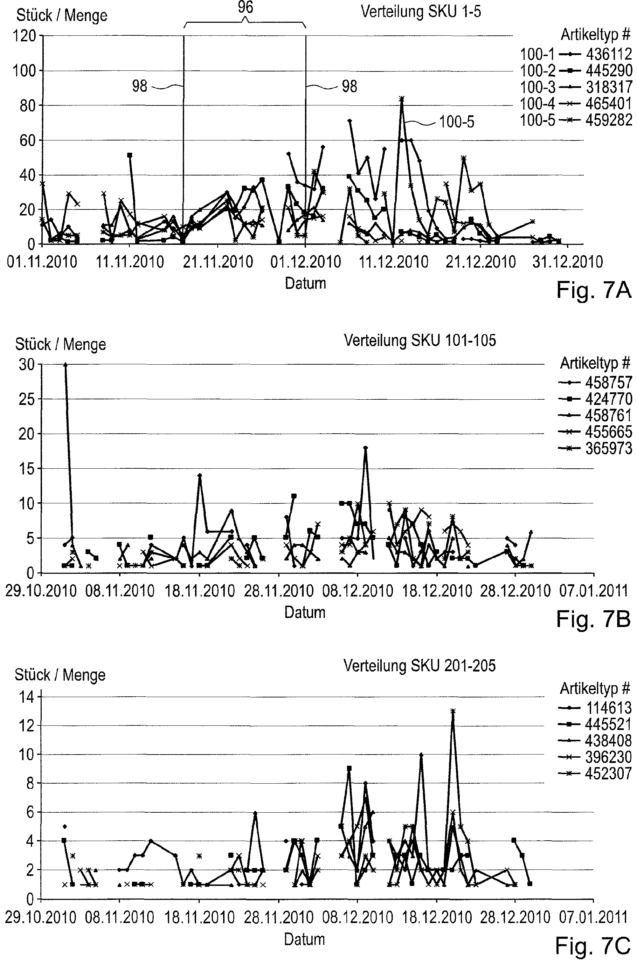

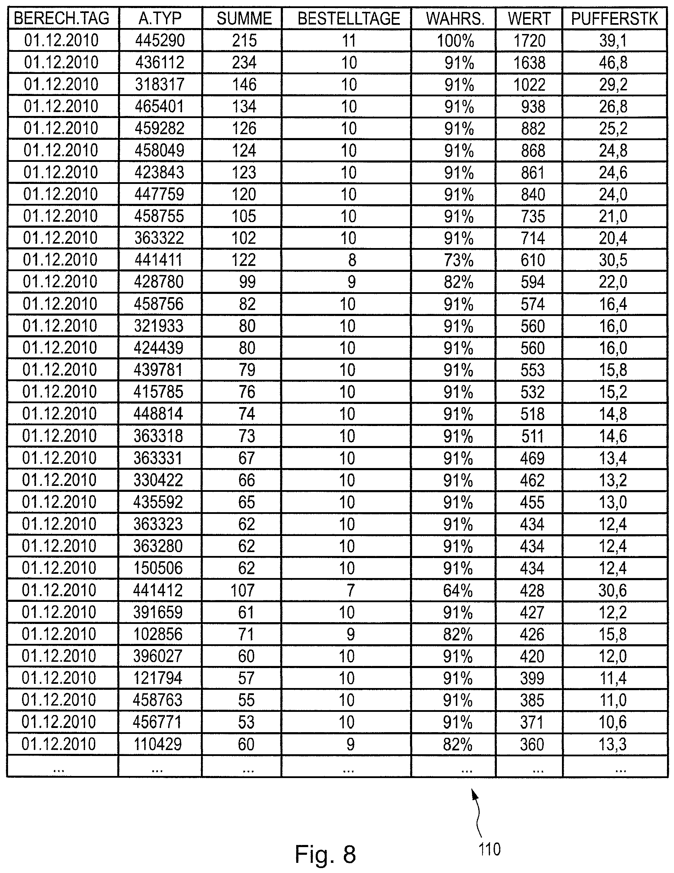

48,2 % aller Aufträge können also aus dem Pufferlager 16 bedient werden. Nur 51,8 % aller Aufträge müssen weiterhin konventionell aus dem Kommissionierlager 12 kommissioniert werden. Um eine derartige Effektivität bzw. eine derartige Auslastung des Pufferlagers 16 bzw. Entlastung des Kommissionierlagers 12 zu erreichen, muss die Art der Bestückung des Pufferlagers 16 (Befüllungsauftrag) mit den Artikeltypen 46 und die physische Größe des Pufferlagers 16 sehr sorgfältig gewählt werden.. Dies gilt umso mehr, weil das Pufferlager 16 eine sehr viel geringere Kapazität (Artikeltypvielfalt und Stückzahl) als das Kommissionierlager 12 hat. Die Bestückung des Pufferlagers 16 wird unter Bezugnahme auf die Fig. 7 und 8 noch näher beschrieben werden.

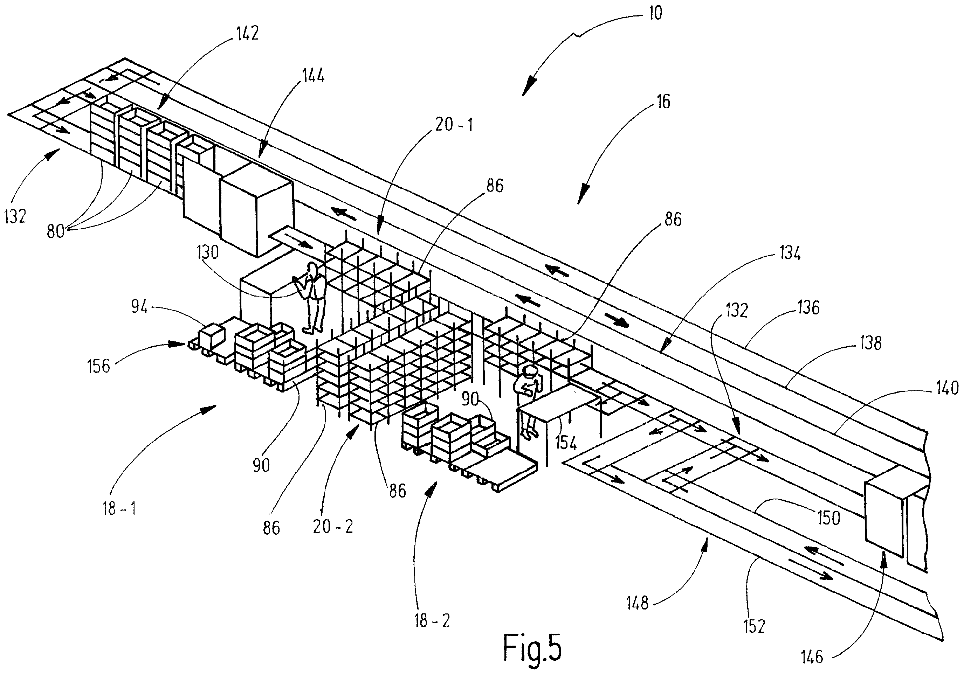

Fig. 5 zeigt eine perspektivische Ansicht eines Teils eines Systems 10. Insbesondere sind ein Pufferlager 16 und exemplarisch zwei Arbeitsstationen 18-1 und 18-2 gezeigt, an denen jeweils eine Kommissionierperson 130 manuell aus Lagerbehältern 80 kommissioniert. Die Arbeitsstationen 18-1 und 18-2 grenzen örtlich aneinander und werden über eine Fördertechnik 132 mit den Lagerbehältern 80 versorgt.

Das Pufferlager 16 ist in der Fig. 5 exemplarisch als Fördertechnikkreisel 134 implementiert, der z.B. drei Förderstrecken 136-140 aufweist, die im Wesentlichen parallel zueinander angeordnet sind und endseitig so miteinander verbunden sind, dass die Lagerbehälter 80 innerhalb des Fördertechnikkreisels 134 endlos umlaufen können. Die Lagerbehälter 80 werden vorzugsweise in Form von Stapeln 142 im Pufferlager 16 bevorratet. Aus Gründen einer vereinfachten Darstellung sind im Bereich des Fördertechnikkreisels 134 keine (Lager-)Stapel 142 gezeigt. Lediglich an einem stromaufwärts gelegenen Ende der Fördertechnik 132 sind exemplarisch vier Stapel 142 gezeigt, die von einer Entstapelvorrichtung 144 vereinzelt werden, um den Kommissionierpersonen 130 einzeln zugeführt zu werden. An einem stromabwärts gelegenen Ende der Fördertechnik 132 ist eine Stapelvorrichtung 146 vorgesehen, um die vereinzelten Lagerbehälter 80 wieder zu stapeln, bevor sie in den Fördertechnikkreisel 134 erneut zurückgespeist werden.

Da die Nachbefüllung und vorzugsweise die initiale Befüllung des Pufferlagers 16 aus dem Kommissionierlager 12 (nicht gezeigt) automatisiert erfolgt, ist z.B. eine Fördertechnik 148 vorgesehen, die an einer beliebigen Stelle an den Fördertechnikkreisel 134 oder die Fördertechnik 132 angeschlossen werden kann und die eine Zuführstrecke 150 und eine Abführstrecke 152 aufweist.

In der Fig. 5 weist jede der Arbeitsstationen 18-1 und 18-2 jeweils einen Tisch 154 auf, um die Artikel 22 (nicht gezeigt) aus den Lagerbehältern 80 entweder direkt in einen Versandbehälter 90 umzupacken oder in eines der Regale 86 (vgl. Fig. 4) zu geben, die die Konsolidierungspuffer-Einrichtungen 20 darstellen. Die Artikel 22 können aber auch direkt gepackt werden. In diesem Fall stellen die Arbeitsstationen 18-1 und 18-2 auch gleichzeitig die entsprechenden Packstationen 34 (vgl. Fig. 4) dar. Fertig gepackte Pakete 94 können auf Zielladungsträger (z.B. Paletten) 156 gepackt werden, die vorzugsweise im Bereich der Arbeitsstationen 18-1 und 18-2 bereitgestellt sind.

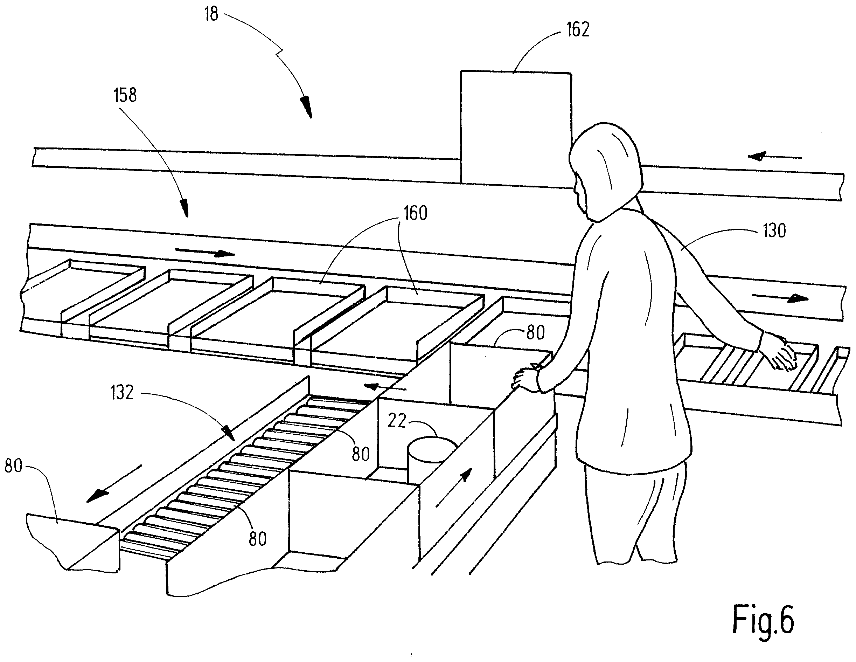

Fig. 6 zeigt eine perspektivische Ansicht eines Teils einer weiteren Arbeitsstation 18, die wiederum eine Fördertechnik 132 zur Bereitstellung von Lagerbehältern 80 aufweist. Die Konsolidierungspuffer-Einrichtung 20 ist in Form eines Sorters 158 implementiert. Der Sorter 158 weist eine Vielzahl von Sorterschalen 160 auf, die fest mit einem endlos umlaufenden Fördermittel (nicht gezeigt) verbunden sind. Der Kommissionierperson 130 kann über einen Monitor 162 angezeigt werden, welche Mengen aus dem jeweils zur Bearbeitung anstehenden Lagerbehälter 80 zu entnehmen sind. Ferner kann der Kommissionierperson 130 angezeigt werden, um welchen der Artikeltypen 46 es sich handelt. Außerdem kann der Kommissionierperson 130 z.B. angezeigt werden, aus welchem der Behälterfächer der jeweilige Artikeltyp 46 zu entnehmen ist. In der Fig. 6 sind ganze Lagerbehälter 80 ohne Fachunterteilung gezeigt. Des Weiteren können Erfassungseinrichtungen (z.B. Scanner, RFID-Lesegeräte, Kameras etc.) vorgesehen sein, die eine Entnahme der Artikel 22 aus den Lagerbehältern 80 und/oder eine Abgabe der entnommenen Artikel 22 an eine jeweilige Schale 160 überwachen und registrieren. Vorzugsweise gibt die Kommissionierperson 130 immer nur ein einziges Stück an eine einzige der Schalen 160 ab. Die so bestückten Schalen 160 bewegen sich anschließend von der Kommissionierperson 130 weg und passieren stromabwärts Zielstellen, die hier nicht gezeigt sind. Jeder der Zielstellen ist einer der Aufträge 40 zugewiesen, so dass die Artikel 22 eines einzigen Auftrags 40 dort gesammelt werden können.

Alternativ zum Sorter 158 kann auch eine Pick-to-Bucket-Anordnung eingesetzt werden. Exemplarische Pick-to-Bucket-Anordnungen sind den Patentanmeldungen DE 10 2004 014 378 A1 und DE 10 2006 057 266 A1 offenbart.

Unter Bezugnahme auf die Fig. 7 und 8 wird nun eine Auswahl der Artikeltypen 46 und eine Bestimmung der zugehörigen Stückzahlen für das Pufferlager 16 erklärt werden.

Die Fig. 7A bis 7C zeigen verschiedene (Artikeltyp-)Verteilungen über längere Zeiträume, wobei exemplarisch der 1. Dezember 2010 als relevanter Berechnungstag ausgewählt wurde. Die Artikeltypverteilungen der Fig. 7A bis 7C wurden aus Daten von Altaufträgen gewonnen, um das Konzept der Erfindung rechnerisch, d.h. mittels Computern, zu simulieren und zu verifizieren. Das zu diesem Zweck exemplarisch betrachtete Artikelsortiment 24 weist, über das Jahr betrachtet, ca. 22.000 verschiedene Artikeltypen 46 auf. Die Grafik der Fig. 7A zeigt fünf Artikeltypen 46 ("SKU1-5"), die sich in der jüngsten Vergangenheit am häufigsten und am meisten verkauft haben. Hierbei handelt es sich um die Artikeltypen mit den Nummern "436112", "445290", "318317", "465401" und "459282".

Um das Artikelsortiment 24 für das Pufferlager 16 für den 1.12.2010 zu bestimmen, werden die Daten der Altaufträgen vorzugsweise aus der unmittelbaren Vergangenheit ausgewertet, die innerhalb eines Zeitfensters 96 vor dem 1.12.2010 liegen. Im vorliegenden Fall wurde ein Zeitfenster 96 mit einer exemplarischen Größe von 14 Tagen betrachtet. Das Zeitfenster 96 ist in der Fig. 7A durch zwei vertikale Hilfslinien 98 verdeutlicht. Das Zeitfenster 96 erstreckt sich vom 17.11.2010 bis zum 30.11.2010. Das Zeitfenster 96 deckt somit zwei Wochen mit insgesamt 11 Arbeitstagen ab (2 x 5 Wochentage + 1 × Samstag). Somit waren Bestellungen an 11 Tagen möglich. Die Kurven 100-1 bis 100-5 verdeutlichen den Verlauf der jeweiligen Artikeltypverteilungen. Die Kurven 100 sind teilweise unterbrochen. Unterbrechungen sind immer dann dargestellt, wenn an einem möglichen Bestelltag überhaupt keine Bestellung getätigt wurde. Je kontinuierlicher und durchgängiger, bzw. stetiger, die Kurven 100 sind, desto häufiger und zeitlich beständiger wurden die entsprechenden Artikeltypen 46 bestellt. Je höher die Amplituden der Kurven 100 sind, desto mehr Mengen wurden von den entsprechenden Artikeltypen 46 bestellt. Die Fig. 7A zeigt, dass die gängigsten Artikeltypen 46 in einer Größenordnung von 30 bis 60 Stück pro Tag (innerhalb des Zeitfensters 96) bestellt wurden. Dennoch schwankt jede der Kurven 100 stark, so dass eine mathematische Vorhersage über einen zukünftigen Kurvenverlauf (z.B. durch Extrapolation) unmöglich ist.

Dieses stark schwankende Verhalten ist auch bei weniger gängigen Artikeltypen erkennbar, wie es in den Fig. 7B und 7C gezeigt ist. Die Fig. 7B verdeutlicht die Bestellmengen und Bestellhäufigkeiten der Artikeltypen 46, die die Plätze 101 bis 105 des Rankings belegen. Die Fig. 7C verdeutlicht die Plätze 201 bis 205 des Rankings. Die täglichen Bestellmengen in den Fig. 7B und 7C sind deutlich kleiner als in der Fig. 7A.

Die zeitliche Größe des Zeitfensters 96 kann variiert werden. Vorzugsweise werden 14 Tage gewählt. Es können aber auch mehr oder weniger Tage gewählt werden. Das Zeitfenster 96 liegt vorzugsweise unmittelbar vor dem relevanten Tag, für den die Bestückung bzw. das ständig zyklisch wechselnde Artikelsortiment für das Pufferlager 16 bestimmt wird. Es versteht sich, dass ein zeitlicher Abstand zwischen dem Berechnungstag und dem Zeitfenster 96 möglich ist. Untersuchungen haben ergeben, dass das Pufferlager 16 umso ineffizienter genutzt wird, je größer dieser zeitliche Abstand ist. Im Beispiel der Fig. 4 konnten 48,2 % aller Aufträge aus dem Pufferlager 16 bedient werden. Je weiter das Zeitfenster 96 vom Berechnungstag entfernt ist, desto geringer wird diese Prozentzahl ausfallen.

Fig. 8 zeigt eine Tabelle 110, die zu den Artikeltypverteilungen der Fig. 7A bis 7C korrespondiert. Die erste Spalte repräsentiert den Berechnungstag (1.12.2010), der für alle Tabellenzeilen gleich ist. Die zweite Spalte der Tabelle 110 repräsentiert den jeweiligen Artikeltyp 46. Die dritte Spalte der Tabelle 110 repräsentiert eine Gesamtsumme der innerhalb des Zeitfensters 96 artikeltypspezifisch bestellten Mengen bzw. eine Gesamtstückzahl. Die vierte Spalte der Tabelle 110 repräsentiert eine Anzahl von Tagen, an denen der jeweilige Artikeltyp jeweils bestellt wurde. Die fünfte Spalte der Tabelle 110 repräsentiert eine Bestellwahrscheinlichkeit. Die sechste Spalte der Tabelle 110 repräsentiert einen rechnerisch bestimmten Wert, der eine Wertigkeit für eine Auswahl des jeweiligen Artikeltyps ausdrückt, um vom Kommissionierlager 12 in das Pufferlager 16 transferiert zu werden. Die siebte Spalte stellt eine Pufferstückzahl dar und gibt an wie viele Stück des betroffenen Artikeltyps im Befüllungsauftrag ausgewiesen werden. Es versteht sich, dass durch einen derartigen Transfer üblicherweise nicht alle Stücke des ausgewählten Artikeltyps aus dem Kommissionierlager 12 in das Pufferlager 16 transferiert werden. Üblicherweise wird nur eine geringe Stückzahl der ausgewählten Artikeltypen aus dem Kommissionierlager 12 in das Pufferlager 16 transferiert, weil das Pufferlager 16 eine sehr viel geringere Kapazität und üblicherweise auch eine sehr viel geringere Kommissionierreichweite hat.

Die Artikeltypen 46 der Tabelle 110 der Fig. 8 (Spalte 2) sind hinsichtlich ihrer Wertigkeit (Spalte 6) absteigend sortiert, d.h. geordnet. Die fünf zeitlich und mengenmäßig am häufigsten im Zeitfenster 96 auftretenden Artikeltypen 46 der Fig. 7A entsprechen den ersten fünf Zeilen der Tabelle 110 der Fig. 8.

Nachfolgend werden die ersten beiden Zeilen der Tabelle 110 der Fig. 8 näher betrachtet.

Die erste Zeile betrifft den Artikeltyp "445290". Der Artikeltyp "445290" wurde an 11 Tagen von 11 möglichen Tagen im Zeitraum vom 17.11.2010 bis 30.11.2010 bestellt. Deshalb beträgt die Bestellwahrscheinlichkeit (Spalte 5) 100 %. Insgesamt wurden in dem relevanten Zeitraum 215 Stück des Artikeltyps "445290" bestellt, wie in der dritten Spalte dargestellt. Der Wert "1720" (Spalte 6) bestimmt sich aus dem Produkt der Stückzahlsumme (215) mit den Bestelltagen (11) abzüglich eines Schwellenwerts (3) von Tagen, an denen der entsprechende Artikeltyp innerhalb des Zeitfensters 96 tatsächlich bestellt worden sein muss (215 x (11-3) = 1720). Dieser Schwellenwert kann beliebig gewählt werden. Im vorliegenden Beispiel muss der entsprechende Artikeltyp also an mehr als drei Tagen innerhalb des Zeitfensters 96 bestellt worden sein, um bei der Auswertung bzw. der Erstellung der Tabelle 110 berücksichtigt zu werden.

Die zweite Zeile der Tabelle 110 betrifft den Artikeltyp "436112", der in Summe 234 mal bestellt wurde, und zwar an 10 von 11 möglichen Tagen, so dass die Bestellwahrscheinlichkeit bei 91 % (10/11 = 0,91) liegt. Nach der oben angegebenen Berechnungsmethode ergibt dies eine Wertigkeit von "1638" (234 x (10-3) = 1638).

Die ersten zwei Zeilen der Tabelle 110 bringen also zum Ausdruck, dass, obwohl der Artikeltyp "436112" mengenmäßig häufiger als der Artikeltyp "445290" bestellt wurde, die Tatsache, dass die Bestellwahrscheinlichkeit für den Artikeltyp "445290" größer als die Bestellwahrscheinlichkeit für den Artikeltyp "436112" ist, mehr ins Gewicht fällt. Ein Artikeltyp 46, der jeden Tag benötigt wird, sollte auf jeden Fall im Sortiment des Pufferlagers 16 vorhanden sein.

Die Anzahl der Artikeltypen 46, die für das Sortiment des Pufferlagers 16 ausgewählt werden können, hängt unter anderem von der physischen Größe der Artikel 22 sowie von einer physischen Größe des Pufferlagers 16 ab. Die Dimensionierung des Pufferlagers 16 wird nachfolgend noch näher beschrieben werden. Zusätzlich werden die Artikeltypen 46 mit geringen Bestellwahrscheinlichkeiten gänzlich aus der Tabelle 110 entfernt, weil sonst hohe, aber sehr unwahrscheinliche Mengen dieser Puffertypen 46 in das Pufferlager 16 aufgenommen würden (z.B. Aktionsartikel, die nicht mehr in der Aktion sind, oder Restmengenverkäufe, etc.). Des Weiteren können Artikeltypen 46 ausgeschlossen oder begrenzt werden, die aufgrund ihres Volumens oder Gewichts eine vorgegebene Einlagermenge unter- oder überschreiten, um ineffiziente Einlagerungen zu verhindern.

Die (Puffer-)Stückzahlen für die für das Pufferlager 16 ausgewählten Artikeltypen 46 sind abhängig von der Kommissionierreichweite des Pufferlagers 16. Als weiterer Parameter kann eine durchschnittliche Bestellmenge pro Tag berücksichtigt werden. Die Pufferstückzahl der Spalte 7 der Tabelle 110 entspricht dem Produkt aus einer durchschnittlichen Bestellmenge (Quotient aus Summe und tatsächlichen Tagen der Bestellung) und der (konfigurierbaren) Kommissionierreichweite. In der Tabelle 110 wurde die 7. Spalte mit einer Kommissionierreichweite von 2 Tagen für das Pufferlager 16 berechnet. Der Artikeltyp "445290" der ersten Spalte der Tabelle 110 wird also rechnerisch mit 39,1 Stück in das Pufferlager 16 für den Berechnungstag 1.12.2010 eingelagert.

Bei der Sortierung der Zeilen der Tabelle 110 können ferner zusätzliche Parameter, wie zum Beispiel das Volumen, die Dimension und das Gewicht des betroffenen Artikeltyps 46, zusätzlich und/oder alternativ berücksichtigt werden. Ferner können für diese Parameter wiederum Schwellenwerte definiert werden. Ein Artikeltyp 46, der besonders schwer oder groß ist, sollte eher nicht in das Pufferlager 16 transferiert werden, weil es die Kommissionierung ergonomisch erschwert und weil der Raum im Pufferlager 16 stark eingeschränkt ist im Vergleich zum Raum im Kommissionierlager 12.

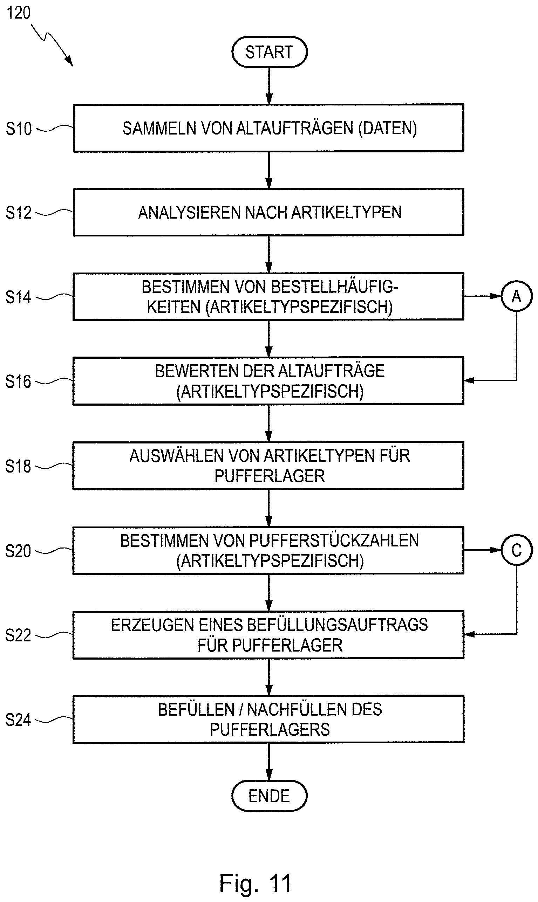

Aus den Pufferstückzahlen der Spalte 7 der Tabelle 10 der Fig. 11 können Behälterfachteilungen basierend auf dem Volumen und dem Gewicht des betroffenen Artikeltyps 46 bestimmt werden. Vorliegend wird exemplarisch davon ausgegangen, dass die Lagerbehälter 80 alle gleich groß und ferner unterteilbar ausgebildet sind. Der Lagerbehälter 80 kann zum Beispiel die Standardmaße 500 x 600 x 400 aufweisen und definiert so ein maximales Gesamtvolumen. Die Behälter 80 können optional zum Beispiel in 2, 4, 6 oder 8 Fächer unterteilt werden. Kleine Fachunterteilungen werden immer dann gewählt, wenn die einzulagernden Artikeltypen 46 ein geringeres Volumen aufweisen. Wenige bis gar keine Fachunterteilungen werden gewählt, wenn die ausgewählten Artikeltypen 46 große Volumina und/oder Gewichte aufweisen.

Außerdem können Schwellenwerte für die maximale Anzahl von Lagerbehältern 80 definiert werden, die mit ein und demselben Artikeltyp 46 im Pufferlager 16 belegt werden. Ferner können Regeln definiert werden, die primär ein Aufstocken der errechneten Pufferstückzahl (siehe Spalte 7 der Tabelle 110 der Fig. 8) auf eine maximal mögliche Stückzahl für das gewählte Behälterfach erlauben. Um zu vermeiden, dass unverhältnismäßig hohe Stückzahlen durch Aufstocken in das Pufferlager 16 transferiert werden, können weitere Schwellenwerte für eine maximale Aufrundung definiert werden. So hat es sich zum Beispiel als vorteilhaft herausgestellt, wenn nicht mehr als das Fünffache der errechneten Pufferstückzahl in das Pufferlager 16 transferiert wird.

Die Kommissionierreichweite des Pufferlagers 16 ist vorzugsweise so gewählt, dass nach dem Ablauf eines Zyklus die im Pufferlager 16 befindlichen Artikel 22 nahezu aufgebraucht sind. Vorzugsweise wird das Sortiment für das Pufferlager 16 jeden Tag auf das Neue bestimmt. Der Zyklus beträgt dann einen Tag. Optional kann das Pufferlager 16 auch öfters am gleichen Tag befüllt werden, wobei die Zyklusdauer dann entsprechend geringer ist. Das Pufferlager 16 wird dann täglich neu befüllt bzw. so nachgefüllt, dass das gewünschte, täglich neue Sortiment erhalten wird. Rücklagerungen aus dem Pufferlager 16 in das Kommissionierlager 12 sind nicht erwünscht und werden nur im Ausnahmefall durchgeführt. Zu diesem Zweck kann zum Beispiel eine maximale Lebensdauer definiert werden, die bestimmt, wie lange einer der Artikeltypen 46 in einem der Lagerbehälter 80 maximal verbleiben darf, ohne dass der entsprechende Behälter 80 nachgefüllt oder neu befüllt wird.

Vorzugsweise werden die (rechnerisch bestimmten) Pufferstückzahlen auf volle Fächer oder ganze Behälter 80 aufgestockt. Die "angepasste" Pufferstückzahl kann in einer weiteren (achten) Spalte (nicht gezeigt) angegeben werden. Die angepasste Pufferstückzahl kann auch Restbestände des entsprechenden Artikeltyps aus dem vorhergehenden Zyklus (z.B. Differenz aus rechnerisch bestimmter Pufferstückzahl und tatsächlicher Reststückzahl) berücksichtigen. Die Anzahl der benötigten Behälterfächer bzw. Behälter wird vorab auf Basis des Volumens und des Gewichts des entsprechenden Artikeltyps 46 ermittelt.

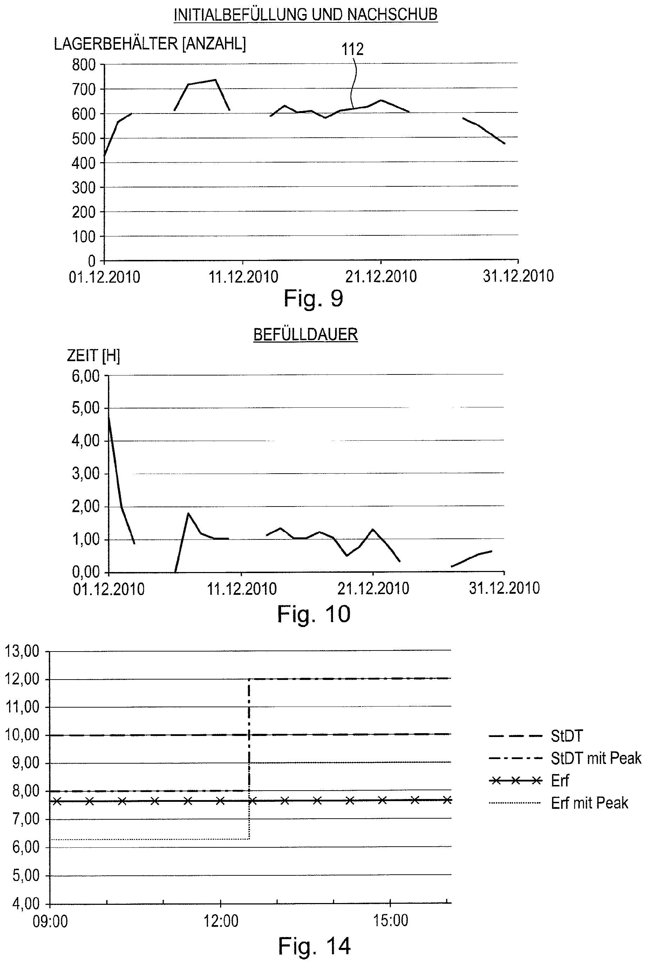

Fig. 9 zeigt einen Verlauf 112 einer (täglich) benötigten Anzahl von Lagereinheiten im Pufferlager 16 mit einer Initialbefüllung des Pufferlagers 16 am 1.12.2010. Die Fig. 9 dient der Veranschaulichung der Bestimmung einer Lagerkapazität des Pufferlagers 16. Die Lagerkapazität drückt allgemein aus, wie viele Artikel 22 eines bestimmten Artikeltyps 46 innerhalb eines der Lager 12 oder 16 gelagert werden können.

Wie zuvor wird davon ausgegangen, dass exemplarisch einheitliche Lagerbehälter 80 zum Bevorraten der Artikel 22 im Pufferlager 16 benutzt werden. Des Weiteren wurde der Verlauf 112 unter der Voraussetzung bestimmt, dass das Pufferlager 16 die 500 häufigsten Artikeltypen 46 des Artikelsortiments 24 aufweist, das in diesem Fall insgesamt ca. 22.000 verschiedene Artikeltypen 46 umfasst. Es versteht sich, dass mehr oder weniger als 500 Artikeltypen gewählt werden können. Die Wahl unter anderem ab von der Größe des gesamten Artikelsortiments 24, der anbieterspezifischen Auftragsstruktur 84, der gewählten Kommissionierreichweite und Ähnlichem.

Um die Artikel 22 der Tabelle 110 der Fig. 8 am 1.12.2010 in das Pufferlager 16 einzulagern, werden ca. 450 (Standard-)Lagerbehälter 80 benötigt. Am 2.12.2010 wird die gleiche Prozedur durchgeführt, wie oben beschrieben, um das Sortiment des Pufferlagers 16 für den Berechnungstag 2.12.2010 zu bestimmen. Dieses Sortiment für den 2.12.2010 kann mit den Restmengen des Sortiments vom 1.12.2010 verglichen werden, um einen Nachschub zu bestimmen, der benötigt wird, um die für den 2.12.2010 gewünschten Artikel 22 im Pufferlager 16 zu haben. Die Lagerbehälteranzahl steigt auf ca. 600 an.

Auf die gleiche Weise werden die für die benötigten Behälteranzahlen für die Tage 3.12. bis 31.12.2010 bestimmt, so dass sich der Verlauf 112 im Monat Dezember 2010 ergibt. Der Verlauf 112 ist teilweise unterbrochen. Dies sich durch Tage erklärt, an denen das System 10 außer Betrieb ist (z.B. Sonntage, etc). Aus dem Verlauf 112 der Fig. 9 ergibt sich eine mittlere Anzahl von ca. 600 Lagerbehältern, die benötigt werden, um das Pufferlager 16 zufriedenstellend zu füllen.

Es versteht sich, dass die absolute Lagerbehälteranzahl und der Verlauf 112 stark von der generellen Auftragsstruktur 84 des entsprechenden Anbieters abhängen. Auch kann die Branche eine Rolle spielen, in der der Anbieter tätig ist. Je nachdem, wie viele Daten von Altaufträgen vorhanden sind, kann der Zeitraum (in der Fig. 9 handelt es sich um den Monat Dezember 2010) verlängert oder verkürzt werden. Es empfiehlt sich, die Dimensionierung des Pufferlagers 16 in Zeiträumen zu bestimmen, in welchen das System Spitzenbelastungen, wie zum Beispiel dem Weihnachtsgeschäft, ausgesetzt ist.

Die Fig. 10 zeigt eine errechnete Befülldauer, um die Behälteranzahlen der Fig. 9 täglich zu befüllen oder nachzufüllen. Man erkennt, dass am Tag der Initialbefüllung, d.h. am 1.12.2010, ca. 5 Stunden für die Befüllung aller 450 Lagerbehälter 80 benötigt werden. Danach fällt die Befülldauer drastisch (Faktor 4-5) ab.

Fig. 11 zeigt ein Flussdiagramm eines Verfahrens 120 zum Bestimmen und Erzeugen eines Befüllungsauftrags für das Pufferlager 16. Die Beschreibung der Fig. 7 und 8 ist ergänzend heranzuziehen.

In einem ersten Schritt S10 werden Daten von Altaufträgen gesammelt. Diese Daten können vom Anbieter bereitgestellt werden und beziehen sich auf bereits in der Vergangenheit erledigt Kommissionieraufträge 40. Die Altaufträge geben unter anderem eine Information über die generelle Auftragsstruktur 84 des Anbieters.

In einem Schritt S12 werden die Daten von allen Altaufträgen nach enthaltenen Artikeltypen 46 analysiert. Die Artikeltypen 46 entsprechen üblicherweise den Auftragszeilen 42. So bekommt man einen Überblick über die Vielfalt der im Zeitfenster 96 liegenden Auftragstypen 46. Die zweite Spalte der Tabelle 110 der Fig. 8 lässt sich so bestimmen.

In einem Schritt S14 können dann artikeltypspezifische Bestellhäufigkeiten sowohl hinsichtlich einer Stückzahl/Menge (siehe Spalte 3 der Tabelle 110 der Fig. 8) als auch hinsichtlich einer Bestellhäufigkeit bzw. -wahrscheinlichkeit (siehe Spalten 4 und 5 der Tabelle 110 der Fig. 8) bestimmt werden. Ob zuerst die mengenmäßige Bestellhäufigkeit oder die zeitliche Bestellhäufigkeit (Bestellwahrscheinlichkeit) bestimmt wird, ist frei wählbar. Die Bestimmung kann auch parallel erfolgen.

Die Bestimmung der Artikeltypen und der entsprechenden Stückzahlen für das Pufferlager 16 muss generell nicht spaltenweise, sondern kann z.B. auch zeilenweise erfolgen.

In einem Schritt S16 werden die Altaufträge artikeltypspezifisch bewertet. Es wird zum Beispiel die Spalte 6 der Tabelle 110 der Fig. 8 auf die dort beschriebene Weise bestimmt. Der Bewertungsschritt S16 umfasst auch das Ordnen bzw. Sortieren der Zeilen der Tabelle 110 der Fig. 8 (aufsteigend, absteigend, etc.). Die Schritte S12 bis S16 werden für alle Artikeltypen 46 durchgeführt, die in den Daten der Altaufträge enthalten sind. Dabei können die im Zusammenhang mit der Fig. 8 erwähnten Schwellenwerte zusätzlich berücksichtigt werden.

In einem Schritt S18 werden solche der Artikeltypen 46 für das Pufferlager 16 ausgewählt, die in der Vergangenheit häufig und in größeren Mengen bestellt wurden, zum Beispiel die 500 Artikeltypen 46 mit den höchsten Wertigkeiten (Spalte 5 der Fig. 8). Die Anzahl der Artikeltypen 46, hier 500, kann von Zyklus zu Zyklus variieren, insbesondere in Abhängigkeit von einem Füllgrad des Pufferlagers 16 und einer Sortimentszusammensetzung.

Im Schritt S18 können optional zusätzlich auch Artikeltypen 46 ausgewählt werden, die in der Analyse des Schritts S12 nicht enthalten waren, aber aufgrund eines (tages-)aktuellen Ereignisses eine sprungartig angestiegene Bestellwahrscheinlichkeit haben. Wenn z.B. schlechtes Wetter für den nächsten Tag vorhergesagt ist, könnten Regenschirme und/oder Taschentücher durch Auswahl der entsprechenden Artikeltypen 46 mit in das Sortiment des Pufferlagers 16 aufgenommen werden, auch wenn Regenschirme und Taschentücher innerhalb des Zeitfensters 96 keine signifikante Relevanz hatten. In diesem Falll kann sich der Betreiber entscheiden, einen vorzugsweise sehr kleinen Teil des rein durch den oben beschriebenen Algorithmus bestimmten Sortiments gegen die Regenschirme und/oder Taschentücher auszutauschen. Vorzugsweise werden dabei ausgewählte Artikeltypen 46 mit geringerer Wertigkeit ausgetauscht. Ähnliches könnte Artikel einer spontanen Werbeaktion durchgeführt werden, um ein weiteres Beispiel zu nennen.

Nachdem im Schritt S18 bestimmt wurde, welche der Artikeltypen 46 zur Befüllung des Pufferlagers 16 ausgewählt wurden, werden in einem Schritt S20 die Pufferstückzahlen artikeltypspezifisch bestimmt (siehe Spalte 6 in Fig. 8, rechnerische Pufferstückzahl). Dieser Schritt kann auch die oben beschriebene Aufstockung auf LHM-Fächer oder ganze LHM umfassen, die in einer weiteren Spalte der Tabelle 110 der Fig. 8 resultiert, die dort nicht gezeigt ist (tatsächliche Pufferstückzahl, Lagerbehälter- und fachunterteilungsabhägig).

In einem Schritt S22 wird dann der aktuelle Befüllungsauftrag für das Pufferlager 16 erzeugt. Der Befüllungsauftrag weist insbesondere die Informationen aus den Spalte 2, 7 und/oder 8 der Tabelle 110 der Fig. 8 auf. Der Befüllungsauftrag kann in der Kommissioniersteuerung 30 in entsprechende Transport- und Umpackaufträge umgewandelt werden (siehe Lagerverwaltung 62, Materialflusssteuerung 64 und Platzverwaltung 66 der Fig. 3).

In einem Schritt S24 wird das Pufferlager 16 dann entsprechend initial befüllt bzw. nachgefüllt.

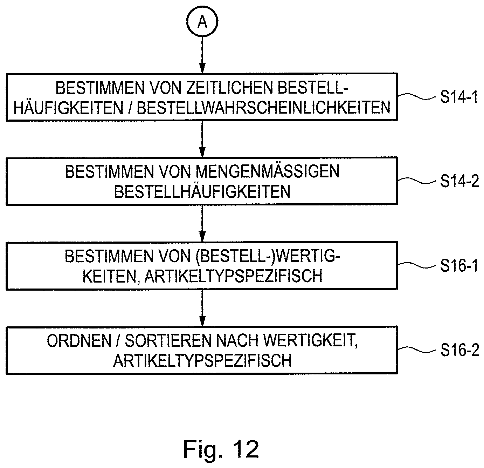

Das Flussdiagramm der Fig. 12 dient der Verdeutlichung der Schritte S14 und S16 des Flussdiagramms 120 der Fig. 11, wie es durch eine Umleitung "A" in der Fig. 11 angedeutet ist.

Der Schritt S14 der Fig. 11 lässt sich in die Schritte S14-1 und S14-2 aufteilen, die in der Fig. 12 gezeigt sind. Im Schritt S14-1 werden die zeitlichen Bestellhäufigkeiten bzw. -wahrscheinlichkeiten bestimmt. Dies bedeutet im Beispiel der Fig. 8, dass bestimmt wird, an wie vielen Tagen ein spezieller Artikeltyp 46 tatsächlich bestellt wurde. Dies erfolgt üblicherweise durch Quotientenbildung der Werte "Bestellhäufigkeit in Tagen" und "Gesamtzahl möglicher Bestelltage". Im Schritt S14-2 werden die mengenmäßigen Bestellhäufigkeiten bestimmt, was in der Fig. 8 durch Summieren aller Bestellungen innerhalb des Zeitfensters 96 erfolgt, wie es durch die dritte Spalte der Tabelle 110 der Fig. 8 ausgedrückt ist.

Im Schritt S16-1 werden die Wertigkeiten der Spalte 6 der Tabelle 110 der Fig. 8 bestimmt, und zwar artikeltypspezifisch. Danach werden die Artikeltypen im Schritt S16-2 bewertet, indem die Wertigkeiten artikeltypspezifisch geordnet bzw. sortiert werden.

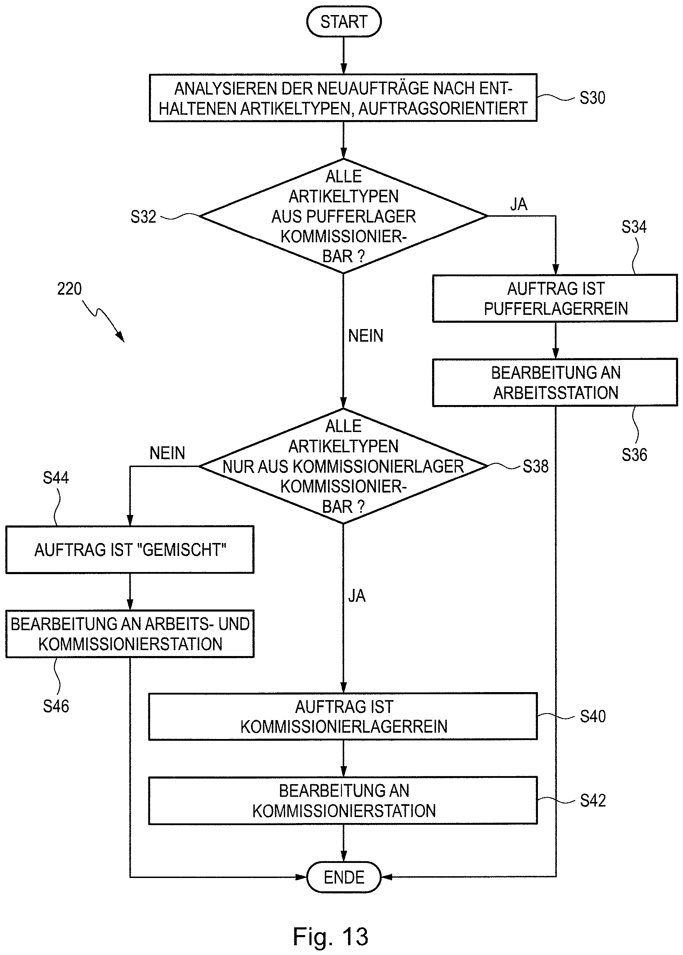

Die Fig. 13 zeigt ein Flussdiagramm eines Kommissionierverfahrens 200. Das Kommissionierverfahren 200 verdeutlicht, auf welche Weise und an welchen Stationen die Aufträge 40, die noch nicht bearbeitet sind, in einem System 10 gemäß der Erfindung bearbeitet werden.

Die eigentliche Kommissionierung baut auf einer auftragsorientierten Analyse der Neuaufträge nach den jeweils enthaltenen Artikeltypen 46 auf (Schritt S30). Die Kommissioniersteuerung 30 analysiert also auftragsorientiert die Neuaufträge nach den enthaltenen Artikeltypen 46. Somit ist klar, welcher der Aufträge 40 welchen bzw. welche der Artikeltypen 46 enthält.

In einem Schritt S32 wird auftragsorientiert abgefragt, ob die in einem jeweiligen Auftrag 40 enthaltenen Artikeltypen 46 alle mit Artikeln 22 kommissionierbar sind, die im Pufferlager 16 gelagert sind. Wenn alle Artikeltypen 46 des jeweiligen Auftrags aus dem Pufferlager 16 kommissionierbar sind, handelt es sich um einen "pufferlagerreinen" Auftrag 40. Der Auftrag 40 wird dann als pufferlagerreiner Auftrag 40 klassifiziert (Schritt S34) und anschließend an der oder den Arbeitsstationen 18 bearbeitet (Schritt S36).

Wenn die Abfrage des Schritts S32 ergibt, dass nicht alle Artikeltypen 46 aus dem Pufferlager 16 kommissionierbar sind, wird in einem Schritt S38 abgefragt, ob alle enthaltenen Artikeltypen 46 ausschließlich aus dem Kommissionierlager 12 kommissionierbar sind. Die enthaltenen Artikeltypen 46 sind dann nicht aus dem Pufferlager 12 kommissionierbar, wenn die im Kommissionierpuffer 16 vorhandene Menge des entsprechenden Artikeltyps 46 nicht ausreicht, um den entsprechenden Auftrag 40 vollständig zu bearbeiten, oder wenn der entsprechende Artikeltyp 46 gar nicht im Pufferlager 16 vorhanden ist. Wenn die Abfrage des Schritts S38 ergibt, dass alle enthaltenen Artikeltypen 46 ausschließlich aus dem Kommissionierlager 12 kommissionierbar sind, wird der entsprechende Auftrag 40 als "kommissionierlagerreiner" Auftrag 40 klassifiziert (Schritt S40) und anschließend an der oder den Kommissionierstationen 18 bearbeitet (Schritt S42).

Wenn die Abfrage des Schritts S38 aber ergibt, dass nicht alle enthaltenen Artikeltypen 46 ausschließlich aus dem Kommissionierlager 12 kommissionierbar sind, ergibt sich als logische Konsequenz der Abfragen der Schritte S32 und S38, dass es sich um einen "gemischten" Auftrag 40 handeln muss. Die entsprechende Klassifizierung erfolgt im Schritt S44. Die Bearbeitung des gemischten Auftrags 40 erfolgt an der oder den Arbeitsstationen 18 und der oder den Kommissionierstationen 14 (Schritt 46).

Es versteht sich, dass alternativ zu den Abfragen der Schritte S32 und S38 abgefragt werden könnte (Schritt nicht dargestellt), ob der entsprechende Auftrag 40 sowohl Artikeltypen 46 aufweist, die ausschließlich im Kommissionierlager 12 bevorratet sind, als auch ferner Artikeltypen 46 aufweist, die auch im Pufferlager 16 bevorratet sind.

Ferner könnte nach der Klassifizierung des Auftrags 40 gemäß dem Schritt S34 ("pufferlagerrein") abgefragt werden, ob es sich um einen einzeiligen Auftrag 40 oder um einen mehrzeiligen Auftrag 40 handelt. Die mehrzeiligen Aufträge 40 erfordern eine Bearbeitung unter Einbeziehung des Konsolidierungspuffers 20 (vgl. Fig. 4). Die einzeiligen Aufträge 40 können direkt, d.h. ohne zeitliche Verzögerung und zwischengeschaltete Pufferschritte, erledigt werden, d.h. umgepackt, gesammelt und/oder verpackt werden.

Im Nachfolgenden werden einige der Vorteile der Erfindung näher betrachtet.

Ein großer Vorteil ist in der Steigerung der Kommissioniereffizienz bzw. -leistung (fertige Aufträge/Zeit) zu sehen, der durch die Vorkommissionierung bzw. die Art und Weise der Befüllung (Sortiment) des Pufferlagers 16 mit besonders häufig in der Vergangenheit benötigten Artikeltypen 46 zusammenhängt.

Die Fig. 14 zeigt ein Diagramm, bei dem eine Anzahl von Mitarbeitern gegen die Tageszeit aufgetragen ist, wobei man die in der Fig. 4 betrachtete Konstellation zugrunde gelegt hat. In einem konventionellen System, bei dem das Pufferlager 16 fehlt und die Kommissionierung ausschließlich aus dem Kommissionierlager 12 erfolgt, werden über den ganzen Tag verteilt 10 Mitarbeiter zum Bewältigen des Arbeitsaufkommens benötigt (StdT, Stand der Technik). Dies ist in der Fig. 14 durch eine Strichlinie angedeutet. Wenn man bei einem derartigen herkömmlichen System zusätzlich Belastungsspitzen berücksichtigt, die üblicherweise nachmittags und abends auftreten, so ergibt sich der strichpunktierte Verlauf (Stand der Technik mit Peak). In diesem Fall werden vormittags üblicherweise 8 Mitarbeiter benötigt, um die anfallende Arbeit zu erledigen, und ab ca. 12.30 Uhr werden sogar 12 Mitarbeiter benötigt. Gemäß der Erfindung werden bei gleichen Anforderungen im Fall der gleichmäßigen Auslastung weniger als 8 Mitarbeiter konstant benötigt (siehe Kurve "Erf"). Im Fall mit einer Ungleichverteilung der Auslastung werden vormittags etwas mehr als 6 Mitarbeiter und nachmittags ca. 9 Mitarbeiter benötigt ("Erf mit Peak"). Man erkennt deutlich, dass mit der Erfindung weniger Mitarbeiter benötigt werden, um den gleichen Arbeitsaufwand zu erledigen. Dies bedeutet, dass das System 10 der Erfindung effizienter arbeitet.

Bei der vorliegenden Erfindung wird der Arbeitsaufwand (Kommissionieren und/oder Befüllen) in solche Zeitphasen verlagert, während denen das System 10 insgesamt wenig ausgelastet ist, wie z.B. am Vormittag.

Durch die vorliegende Erfindung sind also Leistungssteigerungen von 20 bis 30% im Vergleich zu herkömmlichen Lösungen erreichbar. Personalkosten können gesenkt werden oder bei gleichbleibendem Personalaufwand können mehr Aufträge 40 bewältigt werden. Diese Steigerung wird vor allem in Systemen erreicht, die nach dem Waren-zu-Mann-Prinzip kommissionieren. Investitionen in größere (konventionelle) Anlagen sind nicht erforderlich. Bestehende Anlagen können um die Arbeitsstation 18 und das Pufferlager 16 erweitert werden, um die Erfindung umzusetzen.

Ein weiterer Vorteil ist darin zu sehen, dass bei einem steigenden Umsatz Leistungsspitzen nicht mehr kurzfristig durch vermehrten Personaleinsatz abgedeckt werden müssen. Der Personaleinsatz (Wer arbeitet wann und wo?) muss nicht mehr gesteuert werden. So erübrigt sich beispielsweise die kurzfristige Einstellung von Leihpersonal. Dieser Aspekt ist wichtig, weil es große Leistungsunterschiede zwischen Stammpersonal und Leihpersonal gibt.

**BEZUGSZEICHENLISTE**

| | | | |
|---|---|---|---|
| 10 | Lager- und Kommissioniersystem | 80 | Lagerbehälter |
| 12 | Kommissionierlager | 82 | Auftragsblock |
| 14 | Kommissionierstation | 84 | Auftragsstruktur |
| 16 | Pufferlager | F1,F2 | Faktoren |
| 18 | Arbeitsstation | 86 | Regal |
| 20 | Konsolidierungspuffer-Einrichtung | 88 | Regalfach |
| 22 | Artikel | 90 | Versandbehälter |
| 24 | Artikelsortiment | 92 | Block |
| 26 | Artikelströme | 94 | Paket |
| 28 | Wareneingang | 96 | Zeitfenster |
| 30 | Kommissioniersteuerung | 98 | Hilfslinien |
| 32 | Packstation | 100 | Verteilung |
| 34 | Lager- und Kommissionierbereich | 110 | Tabelle |
| 36 | Pack- und Versandbereich | 112 | Verlauf Behälteranzahl |
| 40 | (Kommissionier-)Auftrag | 120 | Verfahren zum Bestimmen eines Befüllungsauftrags |
| 42 | Auftragsposition/Auftragszeile | | |
| 44 | Menge/Stückzahl | 130 | Kommissionierperson |
| 46 | Artikeltyp | 132 | Fördertechnik |
| 48 | Datensatz | 134 | FT-Kreisel |
| 50 | Kopffeld | 136-140 | Förderstrecken |
| 52 | Prioritätsfeld | 142 | Stapel |
| 54 | Artikelfeld | 144 | Stapelvorrichtung |
| 56 | Auftragsverwaltung | 148 | Fördertechnik, optional |
| 58 | Warenwirtschaftssystem | 150 | Zuführstrecke |
| 60 | Kommissionierleitstrategie | 152 | Abführstrecke |
| 62 | Lagerverwaltung | 154 | Tisch |
| 64 | Materialfluss | 156 | Zielladungsträger |
| 66 | Platzverwaltung | 158 | Sorter |
| 68 | I/O-Verwaltung | 160 | Schalen |
| 70 | Leitungen | 162 | Monitor |
| 72 | drahtlose Kommunikation | 200 | Verfahren zum Kommissionieren |

## Patentansprüche

1. Lager- und Kommissioniersystem (10) zum progressiven Kommissionieren von Artikeln (22) gemäß Neuaufträgen, die bestellte Artikel (22) hinsichtlich eines jeweiligen bestellten Artikeltyps (46) einschließlich einer zugehörigen Stückzahl (44) definieren, wobei das System (10) aufweist:
ein Kommissionierlager (12), in welchem eine Vielzahl von unterschiedlichen Artikeltypen (46), die ein Artikelsortiment (24) für die Kommissionierung bilden, gelagert sind, wobei das Kommissionierlager (12) eine Lagerkapazität aufweist, die eine Kommissionierreichweite von vielen Tagen gewährleistet;
eine Kommissionierstation (14) für eine herkömmliche Kommissionierung von Artikeln (22), die im Kommissionierlager (12) gelagert sind, und für eine Abarbeitung von kommissionierlagerreinen Neuaufträgen (40), die Artikeltypen (46) enthalten, die nur im Kommissionierlager (12) gelagert sind;
ein Pufferlager (16), in welchem ausgewählte Artikeltypen (46) vorzugsweise in Lagereinheiten (80) gelagert sind und das eine Lagerkapazität aufweist, die eine Kommissionierreichweite von wenigen Tagen gewährleistet, wobei das Pufferlager (16) mit ausgewählten Artikeltypen (46), die aus dem Kommissionierlager (12) stammen, gemäß einem Befüllungsauftrag gefüllt ist, der zyklisch neu basierend auf Daten von Altaufträgen, die bereits erledigte Kommissionieraufträge (40) aus der Vergangenheit darstellen, bestimmt wird und der die ausgewählten Artikeltypen (46) mit ihren zugehörigen Stückzahlen (44) definiert, wobei die Daten der Altaufträge bestellte Artikeltypen (46) einschließlich ihrer zugehörigen Stückzahlen (44) sowie zugehörige Bestellzeitpunkte aufweisen;
eine Kommissioniersteuerung (30); und
mindestens eine Arbeitsstation (18) mit einer Konsolidierungspuffer-Einrichtung (20) zum auftragsorientierten Abarbeiten der Artikeltypen (46), die im Pufferlager (16) gelagert sind und die in pufferreinen Neuaufträgen, die ausschließlich Artikeltypen (46) enthalten, die im Pufferlager (16) gelagert sind, und gemischten Neuaufträgen (40), die Artikeltypen (46) enthalten, die im Pufferlager (16) und im Kommissionierlager (12) gelagert sind, enthalten sind, wobei die Arbeitsstation (18) materialflusstechnisch mit dem Pufferlager (16) verbunden ist und wobei die bestellten Artikel (22) an der Arbeitsstation (18), vorzugsweise aus den Lagereinheiten (80), genommen und gepackt oder genommen und an die Konsolidierungspuffer-Einrichtung abgegeben werden;
wobei die Kommissioniersteuerung (30) zur zyklischen Erzeugung des Befüllungsauftrags eingerichtet ist, wobei die Erzeugung die folgenden Schritte aufweist:
Auswählen (S18) der Artikeltypen (46), die in der Vergangenheit häufig und in größeren Mengen bestellt wurden, für das Pufferlager (16) aus den Daten der Altaufträge;
Bestimmen (S20) von artikeltypspezifischen Pufferstückzahlen für jeden der ausgewählten Artikeltypen (46); und
Erzeugen (S22) des Befüllungsauftrags, der die ausgewählten Artikeltypen (46) mit ihren zugehörigen Pufferstückzahlen definiert;
und wobei die Kommissioniersteuerung (30) ferner eingerichtet ist, eine Befüllung des Pufferlagers (16) mit den Artikeln (22) der ausgewählten Artikeltypen (46) zu veranlassen.

2. System nach Anspruch 1, wobei das Auswählen (S18) der Artikeltypen (46) aufweist:
Bestimmen (S12) der verschiedenen Artikeltypen (46), die in den Daten der Altaufträge enthalten sind;
für jeden der Artikeltypen (46), der in den Daten der Altaufträge enthalten ist, Bestimmen (S14-1) einer zeitlichen Bestellhäufigkeit, vorzugsweise durch Quotientenbildung aus einer Anzahl von Bestellzeiteinheiten, während denen der jeweilige Artikeltyp (46) bestellt wurde, und einer Anzahl von Bestellzeiteinheiten, während denen Bestellungen möglich waren;
für jeden der Artikeltypen (46), der in den Daten der Altaufträge enthalten ist, Bestimmen (S14-2) einer mengenmäßigen Bestellhäufigkeit, vorzugsweise der Gesamtstückzahl;
Ordnen (S16-2) der verschiedenen Artikeltypen (46) nach zeitlichen und/oder mengenmäßigen Bestellhäufigkeiten, vorzugsweise unter Berücksichtigung von zeitlichen und/oder mengenmäßigen Schwellenwerten; und
Auswählen der zeitlich und/oder mengenmäßig am häufigsten auftretenden Artikeltypen (46).

3. System nach Anspruch 1 oder 2, wobei das zyklische Erzeugen des Befüllungsauftrags ferner aufweist:
Bestimmen einer Verteilung der artikeltypspezifischen Pufferstückzahlen auf die Lagereinheiten.

4. System nach Anspruch 3, wobei die Verteilung der artikeltypspezifischen Pufferstückzahlen auf die Lagereinheiten (80) unter Berücksichtigung von artikeltypspezifischen Volumina und Gewichten sowie von lagereinheitenspezifischen Abmessungen bestimmt wird.

5. System nach einem der Ansprüche 1 bis 4, wobei zyklische Erzeugen des Befüllungsauftrags ferner aufweist:
Austauschen eines kleinen Teils der ausgewählten Artikeltypen gegen Artikeltypen, deren Bestellwahrscheinlichkeit aufgrund eines aktuellen Ereignisses sprungartig angestiegen ist.

6. System nach einem der Ansprüche 1 bis 5, wobei die artikeltypspezifischen Pufferstückzahlen für die ausgewählten Artikeltypen (46) bestimmt werden, indem artikeltypspezifische durchschnittliche Bestellstückzahlen mit der Kommissionierreichweite des Pufferlagers multipliziert werden.

7. System nach einem der Ansprüche 1 bis 6, wobei das Pufferlager (16) eine fixe physische Größe aufweist, die einer fixen Anzahl von (einheitlichen) Lagereinheiten (80) entspricht, die das Pufferlager (16) maximal aufnehmen kann, wobei die fixe Anzahl der Lagereinheiten (80) vorzugsweise durch eine weitere Analyse von mehreren Datensätze von Altaufträgen bestimmt ist.

8. System nach einem der Ansprüche 1 bis 7, wobei die Kommissioniersteuerung (30) ferner eingerichtet ist, die Neuaufträge in die pufferlagerreinen, gemischten und kommissionierlagerreinen Neuaufträge (40) einzuteilen, wobei die pufferlagerreinen und gemischten Neuaufträge (40) bei der Arbeitsstation (18) abgearbeitet werden und die kommissionierlagerreinen Neuaufträge (40) an der Kommissionierstation (14) abgearbeitet werden.

9. System nach einem der Ansprüche 1 bis 8, wobei das Pufferlager (16) eine Lagereinheiten-Speichereinrichtung, insbesondere einen Fördertechnik-Kreisel (134), auf dem die Lagereinheiten (80), die vorzugsweise übereinander gestapelt sind, endlos umlaufen oder ein horizontal umlaufendes Karussell-Regal aufweist.

10. System nach einem der Ansprüche 1 bis 9, das ferner eine Packstation (34) aufweist.

11. System nach einem der Ansprüche 1 bis 10, wobei ein Befüllungsauftrag-Erzeugungszyklus einen Tag beträgt.

12. System nach einem der Ansprüche 1 bis 11, wobei die Konsolidierungspuffer-Einrichtung (20) ein Fachbodenregal, ein Durchlaufregal, eine Pick-to-Bucket-Anordnung oder ein umlaufender Sorter (158) ist, der ein Kommissionierleitsystem aufweist.

13. System nach einem der Ansprüche 1 bis 12, wobei die Kommissioniersteuerung (30) ferner eingerichtet ist, eine Lagerplatzverwaltung (62), eine Kommissionierführung (60) und eine Auftragsverwaltung (58) durchzuführen.

14. Verfahren zum progressiven Kommissionieren von Artikeln (22) gemäß Neuaufträgen (40) in einem Lager- und Kommissioniersystem (10) nach einem der Ansprüche 1 bis 12, mit folgenden Schritten:
Analysieren einer Vielzahl von Neuaufträgen (40) nach enthaltenen Artikeltypen (46);
Einteilen der analysierten Neuaufträge (40) in:
pufferlagerreine Neuaufträge (40), die ausschließlich Artikeltypen (46) enthalten, die im Pufferlager (16) gelagert sind;
gemischte Neuaufträge (40), die Artikeltypen (46) enthalten, die im Pufferlager (16) und im Kommissionierlager (12) gelagert sind; und
kommissionierlagerreine Neuaufträge (40), die Artikeltypen (46) enthalten, die nur im Kommissionierlager (12) gelagert sind;
an der Arbeitsstation (18) auftragsorientiertes Abarbeiten der Artikeltypen (46), die im Pufferlager (16) gelagert sind und die in den pufferreinen und gemischten Neuaufträgen (40) enthalten sind, durch Entnehmen, vorzugsweise aus den entsprechenden Lagereinheiten (80), zwecks direkt anschließender Verpackung oder durch Entnehmen und auftragsorientiertes Sammeln in der Konsolidierungspuffer-Einrichtung (20);
auftragsorientiertes Entnehmen der Artikeltypen (46), die in den gemischten Neuaufträgen enthalten sind und die nur im Kommissionierlager (12) gelagert sind, und auftragsorientiertes Zusammenführen mit den entsprechenden Artikeltypen (46) von der Arbeitsstation (18); und
Abarbeiten der kommissionierlagerreinen Neuaufträge durch Entnehmen der Artikeltypen (46) aus dem Kommissionierlager (12) zwecks direkt anschließender Verpackung.

15. Verfahren zum zyklischen Befüllen eines Pufferlagers in einem Lager- und Kommissioniersystem nach einem der Ansprüche 1 bis 13, das die Schritte aufweist:
Erzeugen eines Befüllungsauftrags gemäß den Schritten aus einem der Ansprüche 1 bis 4; und
Transferien von Artikeln, die hinsichtlich eines Artikeltyps und einer zugehörigen Stückzahl durch den Befüllungsauftrag bestimmt sind, aus dem Kommissionierlager in das Pufferlager.

16. Verfahren nach Anspruch 15, das ferner die Schritte aufweist:
Bestimmen eines aktuellen Füllzustand des Pufferlagers (16), bevor das Pufferlager (16) gemäß dem Befüllungsauftrag aufzufüllen ist;
Vergleichen des aktuellen Füllzustands mit einem gewünschten Füllzustand, der dem Befüllungsauftrag entspricht;
Bestimmen einer Differenz zwischen dem aktuellen und dem gewünschten Füllzustand;
Bestimmen eines angepassten Befüllungsauftrags, der der Differenz entspricht;
Transferieren der Artikel (22), die durch den angepassten Befüllungsauftrag bestimmt sind, aus dem Kommissionierlager (12) in das Pufferlager (16); und
Auffüllen und Nachfüllen der Lagereinheiten (80) mit den Artikeln (22).

## Claims

1. A storage-and-picking system (10) for progressive picking of articles (22) in accordance with new orders defining ordered articles (22) with regard to a respectively ordered article type (46) including an associated quantity (44), wherein the system (10) comprises:
a picking warehouse (12) in which a plurality of different article types (46) forming an article assortment (24) for the picking process are stored, wherein the picking warehouse (12) has a storage capacity ensuring a picking range of several days;
a picking station (14) for conventional picking of articles (22) stored in the picking warehouse (12), and for processing new orders (40), which are picking-warehouse-pure, containing the article types (46) being stored in the picking warehouse (12) only;
a buffer warehouse (16) in which selected article types (46) are stored, preferably in storage units (80), and which has a storage capacity ensuring a picking range of few days, wherein the buffer warehouse (16) is filled with selected article types (46), which originate from the picking warehouse (12), in accordance with a filling order re-determined in cycles based on data of old orders, which represent picking orders (40) of the past already completed, and defining the selected article types (46) including the associated quantity (44) thereof, wherein the data of the old orders comprise ordered article types (46) including associated quantities (44) thereof and associated ordering times thereof;
a picking control (30); and
at least one work station (18) including a consolidation-buffer device (20) for order-orientated processing of the articles types (46), which are stored in the buffer warehouse (16) and are included in buffer-pure new orders, which only include article types (46) being stored in the buffer warehouse (16), and mixed new orders (40), which include article types (46) being stored in the buffer warehouse (16) and in the picking warehouse (12), wherein the work station (18) is connected, in terms of material flow, to the buffer warehouse (16), and wherein, at the work station, the ordered articles (22) are removed, preferably from the storage units (80), and packed, or removed and delivered to the consolidation-buffer device;
wherein the picking control (30) is configured for cyclic generation of the filling order, wherein the generation comprises the following steps:
selecting (S18) the article types (46), which have been ordered frequently in the past and in greater amounts, for the buffer warehouse (16) from the data of the old orders;
determining (S20) article-type-specific buffer quantities for each of the selected article types (46); and
generating (S22) the filling order defining the selected article types (46) including their associated buffer quantities;
and wherein the picking control (30) is further configured to cause filling the buffer warehouse (16) with the articles (22) of the selected article types (46).

2. The system of claim 1, wherein the selecting (S18) the article types (46) comprises:
determining (S12) the different article types (46) being contained in the data of the old orders;
for each of the article types (46) contained in the data of the old orders, determining (S14-1) a temporal ordering frequency, preferably by means of quotient formation from a number of order-time units during which the respective article type (46) has been ordered, and a number of order-time units during which orders had been possible;
for each of the article types (46) contained in the data of the old orders, determining (S14-2) a quantitative ordering frequency, preferably the overall quantity;
arranging (S16-2) the different article types (46) for temporal and/or quantitative ordering frequencies, wherein preferably temporal and/or quantitative threshold values are considered; and
selecting the temporal and/or quantitative most-occurring article types (46).

3. The system of claim 1 or 2, wherein the cyclic generation of the filling order further comprises:
determining distribution of the article-type-specific buffer quantity on the storage units.

4. The system of claim 3, wherein the distribution of the article-type-specific buffer quantity on the storage units (80) is determined by considering article-type-specific volumes and weights as well as storage-unit-specific dimensions.

5. The system of any of claims 1 to 4, wherein the cyclic generation of the filling order further comprises:
exchanging small part of the selected article types with article types, ordering probabilities of which have increased in a stepped manner due to a current event.

6. The system of any of claims 1 to 5, wherein the article-type-specific buffer quantities are determined for the selected article type (46) by multiplying article-type-specific average ordering quantities by the picking range of the buffer warehouse.

7. The system of any of claims 1 to 6, wherein the buffering warehouse (16) has a fixed physical size corresponding to a fixed number of (unitary) storage units (80), which are receivable by the buffer warehouse (16) at maximum, wherein the fixed number of storage units (80) is determined preferably by an additional analysis of several data sets of old orders.

8. The system of any of claims 1 to 7, wherein the picking control (30) is further configured to classify the new orders into buffer-warehouse-pure, mixed, and picking-warehouse-pure new orders (40), wherein the buffer-warehouse-pure and mixed new orders (40) are processed at the work station (18) and the picking-order-pure new orders (40) are processed at the picking station (14).

9. The system of any of claims 1 to 8, wherein the buffer warehouse (16) comprises a storage-unit storage device, in particular a conveyor loop (134), on which the storage units (80), which are preferably stacked on top of each other, circulate endlessly, or a horizontally circulating carrousel rack.

10. The system of any of claims 1 to 9 further comprising a packing station (34).

11. The system of any of claims 1 to 10, wherein a filling-order generation cycle is one day.

12. The system of any of claims 1 to 11, wherein the consolidation-buffer device is one of a shelving, a flow rack, a pick-to-bucket arrangement, and a circulating sorter comprising a picking-guidance system.

13. The system of any of claims 1 to 12, wherein the picking control (30) is further configured to perform storage-location administration (62), picking guidance (60), and order administration (58).

14. A method for progressive picking of articles (22) in accordance with new orders (40) in a storage-and-picking system (10) of one of claims 1 to 12 comprising the following steps:
analyzing a plurality of new orders (40) for article types (46) contained;
classifying the analyzed new orders (40) into:
buffer-warehouse-pure new orders (40) containing only article types (46) which are stored in the buffer warehouse (16);
mixed new orders (40) containing the article types (46) being stored in the buffer warehouse (16) and in the picking warehouse (12); and
picking-warehouse-pure new orders (40) containing the article types (46) being stored in the picking warehouse (12) only;
at the work station (18), order-orientated processing of the article types (46) being stored in the buffer warehouse (16) and being included in the buffer-pure and mixed new orders (40) by removing, preferably from the corresponding storage units (80), for the purpose of being packed directly subsequent, or by removing and order-orientated collecting in the consolidation-buffer device (20);
order-orientated removing the article type (46) being contained in the mixed new orders and being stored in the picking warehouse (12) only, and order-orientated merging with the corresponding article types (46) from the work station (18); and
processing the picking-warehouse-pure new orders by removing the article types (46) from the picking warehouse (12) for the purpose of being packed directly subsequent.

15. A method for cyclic filling a buffer warehouse in a storage-and-picking system of any of claims 1 to 13 comprising the steps of:
generating a filling order in accordance with the steps of one of claims 1 to 4; and
transferring articles, which are determined by the filling order with regard to an article type and associated quantity, from the picking warehouse into the buffer warehouse.

16. The method of claim 15 further comprising the steps of:
determining a current filling state of the buffer warehouse (16) before the buffer warehouse (16) is to be replenished in accordance with the filling order;
comparing the current filling state with a desired filling state corresponding to the filling order;
determining a difference between the current and desired filling states;
determining an adapted filling order corresponding to the difference;
transferring the articles (22) being determined by the adapted filling order from the picking warehouse (12) into the buffer warehouse (16); and
filling and replenishing the storage units (80) with the articles (22).

## Revendications

1. Système d'entreposage et de préparation de commandes (10) destiné à la préparation de commandes progressive d'articles (22) conformément de nouveaux ordres, qui définissent les articles (22) commandés du point de vue d'un type d'articles (46) respectivement commandé, y compris d'une quantité (44) associée, le système (10) comprenant :
un entrepôt de préparation de commandes (12), dans lequel sont entreposés une pluralité de types d'articles (46) différents, lesquels forment un assortiment d'articles (24) pour la préparation de commandes, l'entrepôt de préparation de commandes (12) possédant une capacité d'entreposage qui garantit une couverture de préparation de commandes de nombreux jours ;
un poste de préparation de commandes (14) pour une préparation de commandes courante d'articles (22) qui sont entreposés dans l'entrepôt de préparation de commandes (12) et pour un traitement de nouveaux ordres (40) propres à l'entrepôt de préparation de commandes, lesquels contiennent des types d'articles (46) qui ne sont entreposés que dans l'entrepôt de préparation de commandes (12) ;
un entrepôt tampon (16), dans lequel des types d'articles (46) sélectionnés sont entreposés de préférence dans des unités d'entreposage (80) et qui possède une capacité d'entreposage qui garantit une couverture de préparation de commandes de quelques jours, l'entrepôt tampon (16) étant rempli avec des types d'articles (46) sélectionnés, qui sont issus de l'entrepôt de préparation de commandes (12), conformément à un ordre de remplissage, qui est nouvellement déterminé de manière cyclique en se basant sur des données des anciens ordres, lesquelles représentent des ordres de préparation de commandes (40) du passé déjà exécutés, et qui définit les types d'articles (46) sélectionnés avec leurs quantités (44) associées, les données des anciens ordres comprenant les types d'articles (46) commandés, y compris leurs quantités (44) associées ainsi que les moments de commande associés ;
un contrôleur de préparation de commandes (30) ; et
au moins un poste de travail (18) pourvu d'un dispositif tampon de consolidation (20) destiné au traitement en fonction de l'ordre des types d'articles (46) qui sont entreposés dans l'entrepôt tampon (16) et qui sont contenus dans de nouveaux ordres propres à l'entrepôt tampon, lesquels contiennent exclusivement des types d'articles (46) qui sont entreposés dans l'entrepôt tampon (16), et de nouveaux ordres mélangés (40), lesquels contiennent des types d'articles (46) qui sont entreposés dans l'entrepôt tampon (16) et dans l'entrepôt de préparation de commandes (12), le poste de travail (18) étant relié par technique de flux de matériel avec l'entrepôt tampon (16) et, au niveau du poste de travail (18), les articles (22) commandés étant pris, de préférence dans les unités d'entreposage (80), puis emballés ou pris et délivrés au dispositif tampon de consolidation ;
le contrôleur de préparation de commandes (30) étant conçu pour générer cycliquement l'ordre de remplissage, la génération comprenant les étapes suivantes :
sélection (S18) des types d'articles (46) qui, dans le passé, ont été commandés fréquemment et en grandes quantités pour l'entrepôt tampon (16) à partir des données des anciens ordres ;
détermination (S20) des quantités tampons spécifiques au type d'articles pour chacun des types d'articles (46) sélectionnés ; et
génération (S22) de l'ordre de remplissage, lequel définit les types d'articles (46) sélectionnés avec leurs quantités tampons associées ;
et le contrôleur de préparation de commandes (30) étant en outre conçu pour provoquer un remplissage de l'entrepôt tampon (16) avec les articles (22) des types d'articles (46) sélectionnés.

2. Système selon la revendication 1, la sélection (S18) des types d'articles (46) comprenant :
la détermination (S12) des différents types d'articles (46) qui sont contenus dans les données des anciens ordres ;
pour chacun des types d'articles (46) qui sont contenus dans les données des anciens ordres, la détermination (S14-1) d'une fréquence de commande temporelle, de préférence par calcul de quotients à partir d'un nombre d'unités de temps de commande, pendant lesquelles le type d'articles (46) respectif a été commandé, et d'un nombre d'unités de temps de commande, pendant lesquelles des commandes étaient possibles ;
pour chacun des types d'articles (46) qui sont contenus dans les données des anciens ordres, la détermination (S14-2) d'une fréquence de commande quantitative, de préférence de la quantité totale ;
le classement (S16-2) des différents types d'articles (46) d'après les fréquences de commande dans le temps et/ou quantitatives, de préférence en tenant compte de valeurs de seuil de temps et/ou quantitatives ; et
la sélection des types d'articles (46) qui apparaissent le plus fréquemment dans le temps et/ou quantitativement.

3. Système selon la revendication 1 ou 2, la génération cyclique de l'ordre de remplissage comprenant en outre :
la détermination d'une distribution des quantités tampons spécifiques au type d'articles sur les unités d'entreposage.

4. Système selon la revendication 3, la distribution des quantités tampons spécifiques au type d'articles sur les unités d'entreposage (80) étant déterminée en tenant compte des volumes et des poids spécifiques au type d'articles ainsi que des dimensions spécifiques aux unités d'entreposage.

5. Système selon l'une des revendications 1 à 4, la génération cyclique de l'ordre de remplissage comprenant en outre :
le remplacement d'une petite partie des types d'articles sélectionnés contre des types d'articles dont la probabilité de commande a augmenté brusquement en raison d'un événement actuel.

6. Système selon l'une des revendications 1 à 5, les quantités tampons spécifiques au type d'articles pour les types d'articles (46) sélectionnés étant déterminées en multipliant les quantités commandées moyennes spécifiques à un type d'articles par la couverture de préparation de commandes de l'entrepôt tampon.

7. Système selon l'une des revendications 1 à 6, l'entrepôt tampon (16) présentant une grandeur physique fixe qui correspond à un nombre fixe d'unités d'entreposage (80) (homogènes) que peut accepter au maximum l'entrepôt tampon (16), le nombre fixe d'unités d'entreposage (80) étant de préférence déterminé par une analyse supplémentaire de plusieurs jeux de données d'anciens ordres.

8. Système selon l'une des revendications 1 à 7, le contrôleur de préparation de commandes (30) étant en outre conçu pour diviser les nouveaux ordres en les nouveaux ordres (40) propres à l'entrepôt tampon, mélangés et propres à l'entrepôt de préparation de commandes, les nouveaux ordres (40) propres à l'entrepôt tampon et mélangés étant traités au niveau du poste de travail (18) et les nouveaux ordres (40) propres à l'entrepôt de préparation de commandes étant traités au niveau du poste de préparation de commandes (14).

9. Système selon l'une des revendications 1 à 8, l'entrepôt tampon (16) possédant un dispositif de stockage d'unités d'entreposage, notamment une toupie de manutention (134), sur lequel circulent en continu les unités d'entreposage (80), qui sont de préférence empilées les unes au-dessus des autres, ou un rayonnage carrousel à rotation horizontale.

10. Système selon l'une des revendications 1 à 9, qui possède en outre un poste d'emballage (34).

11. Système selon l'une des revendications 1 à 10, un cycle de génération d'ordre de remplissage étant égal à un jour.

12. Système selon l'une des revendications 1 à 11, le dispositif tampon de consolidation (20) étant un rayonnage à tablettes, un rayonnage dynamique, un arrangement de prélèvement au seau ou un trieur circulaire (158), lequel possède un système de gestion de préparation de commandes.

13. Système selon l'une des revendications 1 à 12, le contrôleur de préparation de commandes (30) étant en outre conçu pour effectuer une gestion des emplacements d'entreposage (62), un guidage de préparation de commandes (60) et une gestion des ordres (58).

14. Procédé de préparation de commandes progressive d'articles (22) conformément à de nouveaux ordres (40) dans un système d'entreposage et de préparation de commandes (10) selon l'une des revendications 1 à 12, comprenant les étapes suivantes :
analyse d'une pluralité de nouveaux ordres (40) d'après les types d'articles (46) qu'ils contiennent ;
classification des nouveaux ordres (40) analysés en :
nouveaux ordres (40) propres à l'entrepôt tampon, lesquels contiennent exclusivement des types d'articles (46) qui sont entreposés dans l'entrepôt tampon (16) ;
nouveaux ordres (40) mélangés, lesquels contiennent des types d'articles (46) qui sont entreposés dans l'entrepôt tampon (16) et dans l'entrepôt de préparation de commandes (12) ; et
nouveaux ordres (40) propres à l'entrepôt de préparation de commandes, lesquels contiennent des types d'articles (46) qui sont entreposés uniquement dans l'entrepôt de préparation de commandes (12) ;
au niveau du poste de travail (18), traitement en fonction de l'ordre des types d'articles (46) qui sont entreposés dans l'entrepôt tampon (16) et qui sont contenus dans les nouveaux ordres (40) propres à l'entrepôt tampon et mélangés, par prélèvement, de préférence à partir des unités d'entreposage (80) correspondantes, en vue d'un emballage qui suit directement ou par prélèvement et regroupement en fonction de l'ordre dans le dispositif tampon de consolidation (20) ;
prélèvement en fonction de l'ordre des types d'articles (46) qui sont contenus dans les nouveaux ordres (40) mélangés et qui sont seulement entreposés dans l'entrepôt de préparation de commandes (12), et fusion en fonction de l'ordre avec les types d'articles (46) correspondants par le poste de travail (18) ; et
traitement des nouveaux ordres propres à l'entrepôt de préparation de commandes par prélèvement des types d'articles (46) depuis l'entrepôt de préparation de commandes (12) en vue d'un emballage qui suit directement.

15. Procédé de remplissage cyclique d'un entrepôt tampon dans un système d'entreposage et de préparation de commandes selon l'une des revendications 1 à 13, comprenant les étapes suivantes :
génération d'un ordre de remplissage conformément aux étapes de l'une des revendications 1 à 4 ; et
transfert d'articles, qui sont déterminés par l'ordre de remplissage du point de vue d'un type article et d'une quantité associée, de l'entrepôt de préparation de commandes vers l'entrepôt tampon.

16. Procédé selon la revendication 15, comprenant en outre les étapes suivantes :
détermination d'un niveau de remplissage actuel de l'entrepôt tampon (16) avant de devoir remplir l'entrepôt tampon (16) conformément à l'ordre de remplissage ;
comparaison du niveau de remplissage actuel avec un niveau de remplissage souhaité, qui correspond à l'ordre de remplissage ;
détermination d'une différence entre le niveau de remplissage actuel et le niveau de remplissage souhaité ;
détermination d'un ordre de remplissage adapté, qui correspond à la différence ;
transfert des articles (22), qui sont déterminés par l'ordre de remplissage adapté, de l'entrepôt de préparation de commandes (12) vers l'entrepôt tampon (16) ; et
remplissage et réassort des unités d'entreposage (80) avec les articles (22).
